# EUROPÄISCHE PATENTSCHRIFT

(11) **EP 2 996 969 B1**
(45) Veröffentlichungstag und Bekanntmachung des Hinweises auf die Patenterteilung: **27.03.2019**
(21) Anmeldenummer: 13814438.1
(22) Anmeldetag: 14.11.2013
(51) Int. Cl.: B65G 19/14, B65G 19/22, B65G 35/08

(54) **VERFAHREN UND FÖRDEREINRICHTUNG ZUR FÖRDERUNG VON SCHÜTTGUT**
METHOD AND CONVEYOR DEVICE FOR CONVEYING BULK MATERIAL
PROCEDE ET DISPOSITIF DE TRANSPORT DE MATIERE EN VRAC

(30) Priorität: 15.05.2013 WO PCT/EP2013/060046
(43) Veröffentlichungstag der Anmeldung: 23.03.2016
(73) Patentinhaber: Bühler GmbH, 92339 Beilngries (DE)
(72) Erfinder: KAMPS, Rolf, CH-8134 Adliswil (CH); PSCHERER, Bertram, DE-92339 Beilngries (DE)
(74) Vertreter: Vossius & Partner Patentanwälte Rechtsanwälte mbB
(86) Internationale Anmeldenummer: PCT/EP2013/073824
(87) Internationale Veröffentlichungsnummer: WO 2014/183810

(56) Entgegenhaltungen:
- EP-A1- 0 422 261
- WO-A1-2005/035404
- NL-A- 7 908 168
- US-A- 2 601 248
- US-A- 4 724 772

## Beschreibung

Die Erfindung betrifft ein Verfahren und eine Fördereinrichtung zum Fördern von Schüttgut.
Derartige Fördereinrichtungen, die geeignet sind zur Förderung von Schüttgut wie beispielsweise Reis, Mehl, Weizen oder Mais entlang unter anderem gekrümmter Rohre von einem Einlass für das Schüttgut zu einem Auslass für das Schüttgut, sind aus dem Stand der Technik als Rohrkettenförderer bzw. Stauscheibenförderer bekannt.
Aus der US 4,197,938 ist ein Förderer für Schüttgut umfassend scheibenartige Mitnehmer bekannt. Die Mitnehmer sind an einem Seil angeordnet, wobei das Seil umfassend die Mitnehmer mittels eines Zahnrads antreibbar ist zur Förderung des Schüttguts unter anderem entlang gekrümmter Rohrabschnitte von einem Einlass zu einem Auslass.
Diese vorbekannte Fördereinrichtung für Schüttgut weist den Nachteil auf, dass beispielsweise bei einer Beschädigung der Mitnehmer im Betrieb deren Austausch aufwändig ist, was die Wartungskosten erhöht und den mittleren Durchsatz an Schüttgut durch die Fördereinrichtung verringert. Zudem ist bei der Verwendung eines Seils als Zugelement mit daran montierten Mitnehmern eine Längenanpassung beispielsweise bei Verkürzung oder Verlängerung der Fördereinrichtung aufwändig. Zudem weist die vorbekannte Fördereinrichtung den Nachteil auf, dass ein Füllgrad der Fördereinrichtung nicht einstellbar ist.

Dokument EP0422261A1 offenbart ein Verfahren gemäß dem Oberbegriff des Anspruchs 1 sowie eine Fördereinrichtung gemäß dem Oberbegriff des Anspruchs 7. Aus der NL 1025855 ist eine Fördereinrichtung mit mehreren Mitnehmern bekannt, die ein elektrisch leitfähiges und/oder magnetisches Material enthalten.
Es ist daher eine Aufgabe der vorliegenden Erfindung, die Nachteile des Bekannten zu vermeiden, insbesondere also eine Fördereinrichtung, ein Mitnehmer und eine Zufuhreinrichtung sowie ein Verfahren bereitzustellen, mit denen ein zuverlässigerer Betrieb der Fördereinrichtung mit einem geringen Wartungsaufwand ermöglicht wird, wobei die Fördereinrichtung im Betrieb kostengünstig ist. Eine weitere Aufgabe ist die Bereitstellung einer Zufuhreinrichtung zur Ermöglichung der Einstellbarkeit eines Füllgrads der Fördereinrichtung. Eine zusätzliche Aufgabe der vorliegenden Erfindung ist die Bereitstellung eines Verfahrens zur Aufrüstung und/oder Umrüstung von bereits installierten Fördereinrichtungen, so dass diese im Betrieb einfach wartbar und kostengünstig sind.

Diese Aufgaben werden durch ein Verfahren und eine Fördereinrichtung gemäss den Ansprüchen gelöst.

### Allgemeine Beschreibung des Prinzips einer erfindungsgemäßen Fördereinrichtung

Beispielsweise umfasst eine Fördereinrichtung einen Förderkanal. Der Förderkanal ist insbesondere als ein Förderrohr ausgebildet. Im Förderkanal ist zumindest ein Mitnehmer angeordnet. Insbesondere sind zumindest zwei Mitnehmer im Förderkanal angeordnet. Die Fördereinrichtung weist zumindest einen Antrieb zum Antreiben des zumindest einen Mitnehmers zur Förderung von Schüttgut entlang einer Förderkanalachse auf. Der zumindest eine Mitnehmer ist zumindest abschnittsweise entlang der Förderkanalachse lose im Förderkanal angeordnet.

Unter einer "Fördereinrichtung" wird im Sinne der vorliegenden Anmeldung eine Einrichtung zur insbesondere kontinuierlichen Förderung von Schüttgut verstanden. Unter einer "kontinuierlichen Förderung" von Schüttgut wird im Sinne der vorliegenden Anmeldung insbesondere auch eine derartige Förderung von Schüttgut verstanden, bei der der Schüttgutstrom im Förderkanal abschnittsweise durch Mitnehmer unterbrochen ist.

Unter einem "Förderkanal" wird im Sinne der vorliegenden Anmeldung ein Kanal verstanden, entlang dessen Längsachse Schüttgut förderbar ist. Beispielsweise kann ein Förderkanal als offene Rinne oder als Hohlkörper mit kreisförmigem, dreieckigem, rechteckigem oder quadratischem Querschnitt oder beliebigen anderen Querschnittsformen ausgebildet sein. Insbesondere ist der Förderkanal als Förderrohr mit kreisförmigem Querschnitt senkrecht zur Längsachse des Förderrohrs ausgebildet. Weiter insbesondere ist der Förderkanal umlaufend als geschlossene Schleife ausgebildet.

Unter einer "Förderkanalachse" wird im Sinne der vorliegenden Anmeldung die Längsachse des Förderkanals verstanden, entlang der das Schüttgut bei bestimmungsgemässem Gebrauch gefördert wird.

Unter einem "Mitnehmer" ("Förderelement") wird im Sinne der vorliegenden Anmeldung ein derartiges Element verstanden, mit welchem bei bestimmungsgemässem Gebrauch im Wesentlichen parallel zur Längsachse des Förderkanals Schüttgut förderbar ist durch Positionieren des Mitnehmers, entlang der Längsachse. Insbesondere ist der Mitnehmer in einem Hohlkörper wie beispielsweise einem Förderrohr anordenbar und entlang der Achse des Hohlkörpers positionierbar zur Förderung von Schüttgut entlang der Achse des Hohlkörpers.

Unter dem Begriff "Schüttgut" wird im Sinne der vorliegenden Anmeldung ein körniges, mehliges oder auch stückiges Gut verstanden, das in einer schüttfähigen Form vorliegt und insbesondere fliessfähig ist. Insbesondere werden als Schüttgut Reis, Mehl, Korn, Weizen, Mais, fliessfähige, pulvrige Substanzen und beliebige Kombinationen daraus verstanden.

Unter einer "losen Anordnung eines Mitnehmers zumindest abschnittsweise entlang der Förderkanalachse" wird im Sinne der vorliegenden Anmeldung ein derartiger Mitnehmer verstanden, der in dem Abschnitt nicht mit einem Antrieb direkt verbunden ist; in dem Abschnitt wird ein derartiger Mitnehmer nur durch entlang der Förderkanalachse benachbart angeordnete Mitnehmer und/oder Schüttgut, welches gefördert wird, entlang der Förderkanalachse bewegt; beispielsweise wird in einem Antriebsabschnitt eine Kraft auf einen Mitnehmer im Wesentlichen parallel zur Förderkanalachse ausgeübt, wodurch der Mitnehmer und mit diesem in Kontakt stehendes Schüttgut im Wesentlichen parallel zur Förderkanalachse positioniert, wobei Mitnehmer und/oder Schüttgut ausserha1b des Antriebsabschnitts der Fördereinrichtung entlang der Förderkanalachse bewegt werden.

Unter der Bezeichnung "A und/oder B" werden im Sinne der vorliegenden Anmeldung die folgenden möglichen Kombinationen verstanden: A; B; A und B; A und kein B; B und kein A.

Die Ausgestaltung der Fördereinrichtung mit zumindest einem lose im Förderkanal angeordneten Mitnehmer hat den Vorteil, dass ein Austausch eines beispielsweise beschädigten Mitnehmers einfach erfolgen kann, da der Mitnehmer lose in dem Förderkanal angeordnet ist. Somit wird der Wartungsaufwand verringert und damit der Betrieb der Fördereinrichtung kosteneffizienter. Zudem ist vorteilhaft eine Anpassung an verschiedene Förderkanallängen durch Entnahme oder Hinzufügung eines Mitnehmers.

Insbesondere ist der Förderkanal in zumindest einer Seitenansicht S-förmig ausgebildet. Dies hat den Vorteil, dass eine Platz sparende Anordnung der Fördereinrichtung insbesondere auf lediglich einem Stockwerk ermöglicht wird; im Stand der Technik werden hierfür üblicherweise zwei oder drei Stockwerke benötigt, in denen die Fördereinrichtung angeordnet wird.

Der Förderkanal, insbesondere das Förderrohr, kann zumindest im Antriebsbereich Stahl enthalten oder daraus bestehen.

Bevorzugt ist der Förderkanal als Führungseinrichtung entlang der Förderkanalachse für den Mitnehmer ausgebildet.

Unter einer "Führungseinrichtung" wird im Sinne der vorliegenden Anmeldung eine Einrichtung zur Begrenzung der Bewegung des Mitnehmers im Wesentlichen senkrecht zur Förderkanalachse verstanden.

Diese Ausgestaltung des Förderkanals als Führungseinrichtung für den Mitnehmer hat den Vorteil, dass der Mitnehmer lediglich eine geringe Bewegung senkrecht zur Förderkanalachse durchführen kann, wodurch Beschädigungen des Mitnehmers im Betrieb minimiert werden.

Diese Ausbildung des Förderkanals als Führungseinrichtung kann beispielsweise dadurch erreicht werden, dass der mittlere Querschnitt des Förderkanals entlang der Förderkanalachse im Wesentlichen eine kongruente Form zum mittleren Querschnitt des Mitnehmers entlang der Förderkanalachse aufweist, so dass der Mitnehmer aber noch im Förderkanal einsetzbar ist und in einer Richtung seitlich zur Förderkanalachse wenig Spiel hat.

Besonders bevorzugt ist der Antrieb derart ausgebildet, dass zumindest abschnittsweise eine Kraft im Wesentlichen parallel zur Förderkanalachse durch den Antrieb direkt auf den Mitnehmer ausübbar ist. Der Mitnehmer kann hierfür mindestens eine Antriebsfläche aufweisen, auf den die genannte Kraft ausgeübt werden kann. Vorteilhafterweise ist die Antriebsfläche elastisch ausgebildet und kann beispielsweise aus Kunststoff oder Gummi bestehen oder damit beschichtet sein. Hierdurch kann erreicht werden, dass zwischen dem Antrieb und dem Mitnehmer nicht nur ein punktförmiger Kontakt besteht, sondern ein linienförmiger oder sogar ein flächenförmiger Kontakt. Ferner kann die Antriebsfläche Stahl enthalten oder daraus bestehen.

Unter der Formulierung, dass "eine Kraft direkt ausübbar ist", wird im Sinne der vorliegenden Anmeldung verstanden, dass die Kraft durch den Antrieb auf den entsprechenden Mitnehmer ausgeübt wird und nicht durch zwischen dem Antrieb und Mitnehmer weitere angeordnete Mitnehmer und/oder Schüttgut.

Diese Ausbildung des Antriebs hat den Vorteil, dass die Kraftübertragung auf den Mitnehmer zuverlässig erfolgen kann auch bei loser Anordnung der Mitnehmer.

Ganz besonders bevorzugt greift der Antrieb zumindest in einem Antriebsabschnitt in den Förderkanal ein zur Ausübung einer Kraft im Wesentlichen parallel zur Förderkanalachse auf einen im Antriebsabschnitt angeordneten Mitnehmer.

Dies hat den Vorteil, dass der Antrieb lediglich in einem Teilbereich der Vorrichtung angeordnet werden muss, was die Wartung der Fördereinrichtung erleichtert und die konstruktive Ausgestaltung der Fördereinrichtung vereinfacht.

Insbesondere ist die Gesamtlänge der im Förderkanal angeordneten Mitnehmer kleiner als die Länge der Förderkanalachse. Bevorzugt ist die Gesamtlänge der Mitnehmer grösser als die Länge der Förderkanalachse minus der Länge des zumindest einen Antriebsabschnitts.

Dies hat den Vorteil, dass der Antrieb der Mitnehmer im Förderkanal zuverlässig gewährbar ist.

Unter der "Gesamtlänge" der Mitnehmer wird die wirksame längste Ausdehnung eines Mitnehmers entlang der Förderkanalachse multipliziert mit der Anzahl der im Förderkanal angeordneten Mitnehmer verstanden.

Falls die Mitnehmer verschieden ausgebildet sind, so wird unter der "Gesamtlänge" der Mitnehmer die Summe der wirksamen längsten Ausdehnungen der Mitnehmer entlang der Förderkanalachse verstanden.

Bevorzugt ist der Antrieb derart ausgebildet, dass eine Kraft im Wesentlichen im der Innenwand des Förderkanals zugewandten Umfangsbereich des Mitnehmers auf den Mitnehmer ausübbar ist.

Unter der Formulierung, dass "eine Kraft im Wesentlichen im Umfangsbereich des Mitnehmers ausübbar ist, der der Innenwand des Förderkanals zugewandt ist", wird im Sinne der vorliegenden Anmeldung verstanden, dass der Antrieb mit einer Antriebseinrichtung am Mitnehmer zur Kraftausübung angreift, wobei die Antriebseinrichtung einen Abschnitt in Umfangsrichtung des Mitnehmers direkt berührt.

Diese Ausgestaltung hat den Vorteil, dass der Antrieb nur im Bereich der Innenwand in den Förderkanal eingreifen muss, um die Antriebswirkung zu erreichen, wodurch Kollisionen des Antriebs mit anderen Teilen des Mitnehmers oder auch eine Kompression von Schüttgut minimiert werden.

Besonders bevorzugt ist der Antrieb aus der Liste der folgenden Antriebsarten oder beliebigen Kombinationen daraus auswählbar oder ausgewählt: Kettengetriebe, Riementriebe, Koppelgetriebe, Zahnradgetriebe, Schneckengetriebe, Magnetgetriebe, Servoantriebe, Direktantriebe. Das Koppelgetriebe kann beispielsweise als Viergelenkantrieb ausgebildet sein, insbesondere als Geradführungsgetriebe.

Derartige Antriebe sind dem Fachmann an sich bekannt. Vorteilhaft kann der am besten geeignete Antrieb gemäss den Anforderungen sowie beispielsweise den konstruktiven Randbedingungen ausgewählt werden.

Insbesondere wird ein Koppelgetriebe verwendet, das sich im Betrieb als besonders vorteilhaft erwiesen hat.

Insbesondere ist es bei Verwendung eines Magnetantriebs notwendig, das Material für den Mitnehmer entsprechend auszuwählen, so dass durch die durch den Magnetantrieb erzeugten magnetischen Wechselfelder ein Antrieb der Mitnehmer möglich ist.

In einer ersten bevorzugten Variante weist der Antrieb mindestens einen Mitnehmerbolzen auf, mittels dessen zumindest abschnittsweise eine Kraft im Wesentlichen parallel zur Förderkanalachse direkt auf den Mitnehmer ausübbar ist, insbesondere auf eine Antriebsfläche des Mitnehmers. Bevorzugt erstreckt sich der Mitnehmerbolzen zumindest während der Kraftausübung auf den Mitnehmer in einer vertikalen Richtung.

Vorteilhafterweise ist der Antrieb in dieser ersten Variante als Kettengetriebe ausgebildet und weist mindestens ein Antriebskettenpaar auf, wobei jedes von zwei gegenüberliegenden Enden des Mitnehmerbolzens an jeweils einer Antriebskette des Antriebskettenpaars befestigt ist. Im Falle sich vertikal erstreckender Mitnehmerbolzen weist der Antrieb dann mindestens eine untere Antriebskette und mindestens eine obere Antriebskette auf.

Der Antrieb kann nur ein einziges oder mehrere Antriebskettenpaare mit jeweiligen Mitnehmerbolzen aufweisen. In einigen Ausführungsformen der ersten Variante sind die Mitnehmerbolzen seitlich vom Förderkanal angeordnet. Bevorzugt sind die Mitnehmerbolzen eines ersten Antriebskettenpaares an einer ersten Seite des Förderkanals angeordnet, und die Mitnehmerbolzen eines zweiten Antriebskettenpaares sind an einer der ersten Seite gegenüber liegenden zweiten Seite des Förderkanals angeordnet. Auf diese Weise kann ein Verkeilen der Mitnehmer verhindert werden, während die Mitnehmerbolzen eine Kraft auf sie ausüben.

Ebenfalls bevorzugt ist der Abstand zweier benachbarter Mitnehmerbolzen im Wesentlichen identisch mit der Ausdehnung der Mitnehmer entlang der Förderkanalachse. Dies bedeutet, dass der Abstand zweier benachbarter Mitnehmerbolzen mindestens so gross ist wie die Ausdehnung der Mitnehmer entlang der Förderkanalachse und höchstens das 1,5-fache, bevorzugt höchstens das 1,25-fache und besonders bevorzugt höchstens das 1,1-fache dieser Ausdehnung beträgt. Hierdurch kann bewerkstelligt werden, dass die Mitnehmer während des Antreibens einander zumindest beinahe berühren und daher einen möglichst geringen Abstand aufweisen. Bevorzugt ist der Abstand zweier benachbarter Mitnehmerbolzen grösser als die Ausdehnung der Mitnehmer entlang der Förderkanalachse; insbesondere kann das Verhältnis dieser Grössen mindestens 1,01 sein.

Auf diese Weise kann ein gewisses Spiel erreicht werden, um Fertigungstoleranzen bzw. Verschleisstoleranzen auszugleichen.

In einer zweiten bevorzugten Variante ist der Antrieb als Kettengetriebe oder Riementrieb ausgebildet und weist mindestens eine Antriebskette auf, die mindestens einen Mitnehmervorsprung enthält. Mittels dieses Mitnehmervorsprungs kann zumindest abschnittsweise eine Kraft im Wesentlichen parallel zur Förderkanalachse direkt auf den Mitnehmer ausübbar sein, insbesondere auf eine Antriebsfläche des Mitnehmers.

Auch in der zweiten Variante kann die Antriebskette seitlich vom Förderkanal angeordnet sein. Es können nur eine einzige oder auch mehrere Antriebsketten vorhanden sein. Beispielsweise kann eine erste Antriebskette mit Mitnehmervorsprüngen an einer ersten Seite des Förderkanals angeordnet sein, und eine zweite Antriebskette mit Mitnehmervorsprüngen kann an einer der ersten Seite gegenüberliegenden zweiten Seite des Förderkanals angeordnet sein. Auch hierdurch kann ein Verkeilen der Mitnehmer verhindert werden, während die Mitnehmerbolzen eine Kraft auf sie ausüben.

Ebenfalls bevorzugt ist der Abstand zweier benachbarter Mitnehmervorsprünge im Wesentlichen identisch mit der Ausdehnung der Mitnehmer entlang der Förderkanalachse. Dies bedeutet, dass der Abstand zweier benachbarter Mitnehmervorsprünge mindestens so gross ist wie die Ausdehnung der Mitnehmer entlang der Förderkanalachse und höchstens das 1,5-fache, bevorzugt höchstens das 1,25-fache und besonders bevorzugt höchstens das 1,1-fache dieser Ausdehnung beträgt. Hierdurch kann ebenso bewerkstelligt werden, dass die Mitnehmer während des Antreibens einander zumindest beinahe berühren und daher einen möglichen geringen Abstand aufweisen. Bevorzugt ist der Abstand zweier benachbarter Mitnehmervorsprünge grösser als die Ausdehnung der Mitnehmer entlang der Förderkanalachse; insbesondere kann das Verhältnis dieser Grössen mindestens 1,01 sein. Auf diese Weise kann ein gewisses Spiel erreicht werden, um Fertigungstoleranzen bzw. Verschleisstoleranzen auszugleichen.

In einer dritten bevorzugten Variante ist der Antrieb als Schneckengetriebe ausgebildet und weist mindestens eine drehbare Antriebsschnecke auf, mittels deren Drehbewegung zumindest abschnittsweise eine Kraft im Wesentlichen parallel zur Förderkanalachse direkt auf den Mitnehmer ausübbar ist, insbesondere auf eine Antriebsfläche des Mitnehmers. Hierfür ist es besonders bevorzugt, wenn sich die Drehachse der Antriebsschnecke im Wesentlichen parallel zur Förderkanalachse erstreckt.

Auch in dieser dritten Variante können nur eine einzige oder auch mehrere drehbare Antriebsschnecken vorhanden sein. Beispielsweise kann eine erste Antriebsschnecke auf einer ersten Seite des Förderkanals angeordnet sein, und eine zweite Förderschnecke kann an einer der ersten Seite gegenüberliegenden zweiten Seite des Förderkanals angeordnet sein.

Ebenfalls bevorzugt ist die Ausdehnung der Mitnehmer entlang der Förderkanalachse im Wesentlichen ein ganzzahliges Vielfaches der Ganghöhe der Antriebsschnecke. Dies bedeutet, dass das Verhältnis aus der Ausdehnung der Mitnehmer entlang der Förderkanalachse und der Ganghöhe der Antriebsschnecke höchstens um 0,4, bevorzugt höchstens um 0,2 und besonders bevorzugt höchstens um 0,1 kleiner ist als eine ganze Zahl, wobei diese ganze Zahl beispielsweise 1, 2, 3, 4, 5 oder 6 sein kann. Beispielsweise könnte also das genannte Verhältnis im Bereich von 3,6 bis 4, bevorzugt von 3,8 bis 4 und besonders bevorzugt von 3,9 bis 4 liegen. Auch hierdurch kann bewerkstelligt werden, dass die Mitnehmer während des Antreibens einander zumindest beinahe berühren und daher einen möglichst geringen Abstand aufweisen. Ebenfalls bevorzugt ist das genannte Verhältnis um mindestens 0,01 kleiner als die genannte ganze Zahl; auf diese Weise kann ein gewisses Spiel erreicht werden, um Fertigungstoleranzen bzw. Verschleisstoleranzen auszugleichen.

Im Falle mehrerer Antriebskettenpaare und/oder Antriebsketten und/oder Antriebsschnecken werden diese bevorzugt zueinander synchronisiert. Dies ist beispielsweise mit einem an sich bekannten Zahnradgetriebe möglich, über welches die Antriebskraft von einem Motor auf mehrere oder alle Antriebsketten und/oder Antriebsschnecken übertragbar ist. Durch eine solche Synchronisierung kann insbesondere gewährleistet werden, dass sich die oben beschriebenen Mitnehmerbolzen zumindest während der Kraftausübung auf den Mitnehmer in einer vertikalen Richtung erstrecken und dass sich mehrere Mitnehmerbolzen, Mitnehmervorsprünge oder Antriebsschnecken mit gleicher Geschwindigkeit bewegen.

Bevorzugt hat der Antriebsabschnitt in Richtung der Förderkanalachse eine Länge, welche mindestens das Doppelte, bevorzugt mindestens das Dreifache der Länge eines Mitnehmers beträgt. Hierdurch kann gewährleistet werden, dass sich zu jedem Zeitpunkt mindestens ein Mitnehmer vollständig im Antriebsabschnitt befindet.

An einer Innenwand des Förderkanals kann mindestens ein Leitelement vorhanden sein, und der Mitnehmer kann ein korrespondierendes Gegenleitelement aufweisen, mittels dessen der Mitnehmer entlang des Leitelements führbar ist. Hierdurch kann ein Verkippen oder Verkeilen des Mitnehmers verhindert werden. Das Leitelement kann beispielsweise als Seitenleitblech ausgebildet sein. Bevorzugt sind an der Innenwand des Förderkanals mindestens zwei und weiter bevorzugt genau zwei einander gegenüberliegende Seitenleitbleche angeordnet.

Wahlweise kann eine Zentrierung der Mitnehmer über die oben beschriebenen Mitnehmerbolzen erfolgen. Die oben beschriebene Antriebskette kann seitlich geführt werden und kann so seitliche Kräfte aufnehmen.

Ganz besonders bevorzugt ist eine Kraftübertragung zwischen zwei im Förderkanal parallel zur Förderkanalachse benachbart angeordneten Mitnehmern mittels direkten Kontakts zwischen den Mitnehmern erzielbar und/oder durch zwischen den Mitnehmern im Förderkanal angeordnetes Schüttgut.

Dies hat den Vorteil, dass die Anordnung eines Antriebs in einem Antriebsabschnitt ausreichend ist, was die Fördereinrichtung kostengünstiger und in der Wartung einfacher macht.

### Allgemeine Beschreibung des Prinzips eines Förderelements

Ein weiterer Aspekt betrifft einen Mitnehmer zur Förderung von Schüttgut in einer Fördereinrichtung wie oben beschrieben. Der Mitnehmer umfasst eine Mitnehmerfläche und eine Ausrichtungseinrichtung zur zumindest abschnittsweisen Ausrichtung der mittleren Oberflächensenkrechten der Mitnehmerfläche im Wesentlichen parallel zur Förderkanalachse.

Unter einer "Mitnehmerfläche" des Mitnehmers wird im Sinne der vorliegenden Anmeldung diejenige Fläche verstanden, die im Wesentlichen die Förderung des Schüttguts in der Fördereinrichtung bei bestimmungsgemässem Gebrauch des Mitnehmers bewirkt.

Unter einer "Ausrichtungseinrichtung" wird eine derartige Einrichtung verstanden, mittels der die Mitnehmerfläche des Mitnehmers im Förderkanal so ausrichtbar ist, dass der Mitnehmer bei bestimmungsgemässem Gebrauch dazu geeignet ist, Schüttgut zu fördern. Beispielsweise kann dies durch eine entsprechende Dimensionierung als Zylinder, mittels am Umfang des Mitnehmers parallel zur Förderachse angeordneter Streben (Schafte) oder voneinander beabstandeter Scheiben, die mit einer Strebe (einem Schaft) verbunden sind, erzielt werden.

Unter der "mittleren Oberflächensenkrechten" der Mitnehmerfläche wird im Sinne der vorliegenden Anmeldung der Mittelwert der Oberflächensenkrechten auf der wirksamen Mitnehmerfläche verstanden, die bei bestimmungsgemässem Gebrauch mit Schüttgut in Kontakt kommen kann.

Die Ausrichtung der Mitnehmerfläche mit einer Ausrichtungseinrichtung im Wesentlichen parallel zur Förderkanalachse hat den Vorteil, dass die Mitnehmerfläche im Betrieb eine gewünschte Position einnimmt und damit einen effizienten und kostengünstigen Betrieb ermöglicht. Da die Ausrichtungseinrichtung am Mitnehmer selbst angeordnet ist, ist beispielsweise bei Beschädigung des Mitnehmers ein einfacher Austausch möglich, da der Mitnehmer lose im Förderkanal anordenbar ist, was die Wartung vereinfacht.

Bevorzugt deckt bei Ausrichtung der mittleren Oberflächensenkrechten der Mitnehmerfläche im Wesentlichen parallel zur Förderkanalachse die Mitnehmerfläche den mittleren Förderkanalquerschnitt zu kleiner 100 % ab. Bevorzugt wird der mittlere Förderkanalquerschnitt im Bereich von 50 % bis 99,9 % und besonders bevorzugt von 80 % bis 99,9 % abgedeckt. Insbesondere kann eine Abdeckung im Bereich von 85 % bis 99, 9 % liegen, optional im Bereich von 90 % bis 99,8 % und weiter optional von 92 % bis 97 %; insbesondere wird die Abdeckung in Abhängigkeit vom zu fördernden Schüttgut gewählt.

Unter dem "mittleren Förderkanalquerschnitt" wird im Sinne der vorliegenden Anmeldung der Mittelwert der Querschnittsflächen senkrecht zur Förderkanalachse verstanden, durch den bei bestimmungsgemässem Gebrauch Schüttgut gefördert wird.
Dies hat den Vorteil einer effizienten Förderung von Schüttgut entlang des Förderkanals, was den Betrieb kosteneffizient macht.

Erfindungsgemäß ist die Ausrichtungseinrichtung als zumindest ein erstes Flächenelement und ein zweites Flächenelement ausgebildet, die voneinander im Wesentlichen parallel zur Förderkanalachse beabstandet und miteinander wirkverbunden angeordnet sind, wobei die mittleren Oberflächensenkrechten der Flächenelemente im Wesentlichen parallel zur Förderkanalachse angeordnet sind.
Dies hat den Vorteil der einfachen konstruktiven Ausgestaltung des Mitnehmers. Weiter weist diese Ausgestaltung die oben zur Ausrichtungseinrichtung aufgeführten Vorteile auf.
Beispielsweise kann also der Mitnehmer aus zwei parallel zur Förderkanalachse voneinander beabstandeten kreisförmigen Scheiben ausgebildet sein, die mittels einer Strebe (einem Schaft), die gegebenenfalls im Wesentlichen parallel zur Förderkanalachse angeordnet ist, miteinander verbunden sind.
Die Antriebsfläche des Mitnehmers kann an einer der beiden Flächenelemente angeordnet sein. Insbesondere kann die Mitnehmerfläche durch eine erste Seite einer der beiden kreisförmigen Scheiben gebildet sein, und die Antriebsfläche kann durch eine der ersten Seite gegenüberliegende zweite Seite dieser Scheibe gebildet sein.
Ganz besonders bevorzugt sind die vom Umfang des ersten Flächenelements und des zweiten Flächenelements umschlossenen Flächen bei einer Projektion parallel zu den mittleren Oberflächensenkrechten im Wesentlichen kongruent ausgebildet.
Unter der "vom Umfang umschlossenen Fläche" des ersten Flächenelements bzw. des zweiten Flächenelements wird im Sinne der vorliegenden Anmeldung verstanden, dass die äusseren Umhüllenden des ersten Flächenelements bzw. des zweiten Flächenelements bei Anordnung in einem Förderkanal im Wesentlichen kongruent aufeinander abbildbar sind; beispielsweise sind zwei parallel zueinander angeordnete vollflächige, kreisförmige Scheiben mit identischem Durchmesser mit parallel zueinander angeordneten Flächen im Wesentlichen kongruent ausgebildet; auch eine kreisförmige, vollflächige Scheibe ohne Öffnungen ist bei Anordnung in einem Förderrohr mit kreisförmigem Querschnitt im Wesentlichen kongruent zu einem Flächenelement umfassend radial angeordnete Streben (Schafte) mit Hohlräumen zwischen den Streben ausgebildet, wenn die Streben den gleichen Radius wie die kreisförmige, vollflächige Scheibe aufweisen.

Die Ausbildung des ersten Flächenelements und des zweiten Flächenelements im Wesentlichen kongruent zueinander hat den Vorteil, dass der Mitnehmer konstruktiv einfach ausgestaltbar ist, was die Wartung weiter vereinfacht und die Kosten für den Mitnehmer senkt.

Bevorzugt ist das der Förderrichtung des Schüttguts zugewandte erste Flächenelement des Mitnehmers für das Schüttgut durchlässig. Insbesondere umfasst das zweite Flächenelement die Mitnehmerfläche. Insbesondere ist das zweite Flächenelement auf der der Förderrichtung abgewandten Seite des Mitnehmers angeordnet.

Unter der "Förderrichtung" wird im Sinne der vorliegenden Anmeldung die Richtung verstanden, in der das Schüttgut im Mittel entlang des Förderkanals in der Fördereinrichtung gefördert wird, insbesondere in einem Abschnitt entlang des Förderkanals.

Unter dem Begriff "durchlässig" für ein Flächenelement wird im Sinne der vorliegenden Anmeldung eine Durchlässigkeit für das zu fördernde Schüttgut verstanden; beispielsweise kann eine Durchlässigkeit durch Anordnung von ausreichend grossen Öffnungen für das Schüttgut im ersten Flächenelement ausgestaltet sein.

Die Durchlässigkeit des ersten Flächenelements, welches beabstandet im Wesentlichen parallel zur Förderkanalachse zum zweiten Flächenelement angeordnet ist, hat den Vorteil, dass der Raum zwischen den Flächenelementen zur Förderung von Schüttgut verwendet werden kann, was den Durchsatz erhöht und damit effizienter im Hinblick auf die Kosten ist.

Erfindungsgemäß weist der Mitnehmer auf der der Förderrichtung zugewandten und/oder auf der der Förderrichtung abgewandten Seite einen Abstandshalter auf. Insbesondere ist der Abstandshalter ein im Wesentlichen parallel zur Förderkanalachse angeordneter Arm. Weiter insbesondere ist der Abstandshalter am vom Mitnehmer abgewandten Ende kugelförmig oder kalottenförmig ausgebildet.
Unter der Formulierung "kugelförmig oder kalottenförmig" wird im Sinne der vorliegenden Anmeldung verstanden, dass am dem Mitnehmer abgewandten Ende des Abstandshalters eine Kugel oder eine Kalotte angeordnet ist. Unter einer Kalotte wird ein abgeflachter Kugelschnitt verstanden.
Die Anordnung von zumindest einem Abstandshalter am Mitnehmer hat den Vorteil, dass ein Mindestabstand zur effizienten Förderung von Schüttgut im Förderkanal mit konstruktiv einfachen Mitteln erzielbar ist, was den Wartungsaufwand verringert und den Betrieb kostengünstig und effizient ausgestaltet. Die Anordnung eines kugelförmigen oder kalottenförmigen Abstandshalters hat den Vorteil, dass auch in gekrümmten Förderkanälen der Abstandshalter zuverlässig funktioniert und das Auftreten hoher Punktbelastungen minimiert wird, was den Verschleiss und damit den Wartungsaufwand reduziert.
Ganz besonders bevorzugt weist der Mitnehmer auf der der Förderrichtung zugewandten oder auf der der Förderrichtung abgewandten Seite eine Ausnehmung auf, die derart ausgebildet ist, dass der Abstandshalter in die Ausnehmung eingreifen kann.
Insbesondere ist die Ausnehmung trichterförmig und weiter insbesondere zumindest abschnittsweise kugelförmig oder zumindest abschnittsweise parabelförmig ausgebildet.
Dies hat den Vorteil, dass ein Abstandshalter zuverlässig auch in gekrümmten Bereichen des Förderkanals in die Ausnehmung eingreifen kann, was den Betrieb zuverlässiger macht und den Verschleiss verringert für einen geringeren Wartungsaufwand.

### Allgemeine Beschreibung des Prinzips einer Zufuhreinrichtung für Schüttgut, zum Beispiel für eine erfindungsgemäße Fördereinrichtung

Ein weiterer Aspekt betrifft eine Zufuhreinrichtung für Schüttgut in einen Einlass in eine Fördereinrichtung umfassend einen Förderkanal mit einer Innenwand. Insbesondere wird die Zufuhreinrichtung mit einer Fördereinrichtung wie vorstehend beschrieben verwendet und optional mit einem Mitnehmer wie vorstehend beschrieben. Das Schüttgut ist im Wesentlichen mittels Schwerkraft in die Fördereinrichtung förderbar. Insbesondere wird die Zufuhreinrichtung an einem im Wesentlichen horizontalen Abschnitt der Fördereinrichtung angeordnet. Der Einlass überstreicht einen Winkelbereich der Innenwand von grösser 0°bis kleiner 180° und/oder kleiner 0° bis grösser -180° bezogen auf die Schwerkraftrichtung. Bevorzugt ist der Winkelbereich grösser 20° bis kleiner 160° und/oder kleiner -20° bis grösser - 160°. Besonders bevorzugt ist der Winkelbereich grösser 45° bis kleiner 150° und/oder kleiner -45° bis grösser -150°.

Unter einem "Winkel bezogen auf die Schwerkraftrichtung" wird im Sinne der vorliegenden Anmeldung verstanden, dass die Schwerkraftrichtung einen Winkel von 0° definiert und ein positiver Winkel im Uhrzeigersinn zur Schwerkraftrichtung gemessen wird und ein negativer Winkel im Gegenuhrzeigersinn.

Ein "im Wesentlicher horizontaler Abschnitt" ist im Sinne der vorliegenden Anmeldung ein Abschnitt, der im Wesentlichen senkrecht zur Schwerkraftrichtung angeordnet ist.

Unter einem "Winkelbereich, der die Innenwand überstreicht" wird im Sinne der vorliegenden Anmeldung verstanden, dass der Einlass in die Fördereinrichtung einen Öffnungswinkel überstreicht, gemessen von der Förderkanalachse, d. h. dem Mittelpunkt des Förderkanals. Der Winkelbereich ist als mittlerer Winkelbereich aufzufassen.

Beispielsweise ist also der Einlass, wenn der Einlass in einem im Wesentlichen horizontalen Abschnitt der Fördereinrichtung angeordnet ist, seitlich angeordnet.

Die Anordnung des Einlasses im beschriebenen Winkelbereich hat den Vorteil, dass eine Füllhöhe bzw. ein Füllgrad im Förderkanal entsprechend den Anforderungen einstellbar ist. Der Winkelbereich kann vorteilhaft in Abhängigkeit vom verwendeten Schüttgut gewählt werden.

Beispielsweise kann der Winkelbereich fest eingestellt sein; dies hat den Vorteil, dass der Winkelbereich beispielsweise für ein zu förderndes Schüttgut auf einen optimalen Wert fixierbar ist, was den Betrieb der Fördereinrichtung zuverlässiger macht.

Bevorzugt ist der Winkelbereich einstellbar, insbesondere mittels eines Schiebers.

Beispielsweise kann der Schieber als Drehschieber und/oder als Drehmuffe am Förderkanal und/oder an der Zufuhreinrichtung angeordnet sein.

Die Einstellbarkeit des Winkelbereichs hat den Vorteil, dass in Abhängigkeit von den Anforderungen an die Schüttgutförderung sowie auch in Abhängigkeit vom zu fördernden Schüttgut der Winkelbereich einstellbar ist zur Einstellung des Füllgrads im Förderkanal.

Besonders bevorzugt umfasst die Zufuhreinrichtung einen Umlenkbereich zur Förderung des Schüttguts zum Einlass.

Dies hat den Vorteil, dass das Schüttgut, welches beispielsweise stromaufwärts in einem Vorratsbehälter gelagert ist, durch den Umlenkbereich zum Förderkanal förderbar ist, wobei durch den Umlenkbereich die Fördergeschwindigkeit bzw. Förderrate des Schüttguts in den Förderkanal einstellbar ist.

Unter einem "Umlenkbereich" wird im Sinne der vorliegenden Anmeldung ein Bereich verstanden, in dem eine Umlenkung des Schüttguts von einer Förderrichtung im Wesentlichen parallel zur Schwerkraftrichtung stattfindet.

Ganz besonders bevorzugt ist der Umlenkbereich als Umlenkfläche ausgebildet und in einem Umlenkwinkel bezogen auf die Schwerkraftrichtung im Bereich von 30° bis 70° angeordnet.

Bevorzugt ist der Umlenkwinkel im Bereich von 40° bis 60°, besonders bevorzugt von 45° bis 55° angeordnet.

Alternativ kann der Umlenkwinkel auch -30° bis -70°, bevorzugt von -40° bis -60° und besonders bevorzugt von -45° bis -55° betragen.

Die Anordnung einer Umlenkfläche im beschriebenen Winkelbereich hat den Vorteil, dass in Abhängigkeit vom verwendeten Schüttgut und der geforderten Flussrate die Menge an zugeführtem Schüttgut einstellbar ist.

Insbesondere ist der Umlenkwinkel einstellbar, was vorteilhaft eine Einstellbarkeit des Umlenkwinkels in Abhängigkeit der jeweiligen Anforderungen erlaubt.

### Allgemeine Beschreibung des Prinzips eines Verfahrens zur Förderung von Schüttgut mit einer erfindungsgemäßen Fördereinrichtung und/oder mindestens einem oben beschriebenen Förderelement

Ein zusätzlicher Aspekt der vorliegenden Erfindung betrifft ein Verfahren zum Fördern von Schüttgut mit einer Fördereinrichtung wie oben beschrieben. Optional umfasst die Fördereinrichtung einen Mitnehmer wie oben beschrieben. Weiter optional umfasst die Vorrichtung eine Zufuhreinrichtung wie oben beschrieben. Das Verfahren umfasst den Schritt der Förderung des Schüttguts von einem Einlass zu einem Auslass.

Das Verfahren weist die oben beschriebenen Vorteile auf.

### Allgemeine Beschreibung des Prinzips eines Verfahrens zum Aufrüsten und/oder Umrüsten einer erfindungsgemäßen Fördereinrichtung

Ein weiterer Aspekt betrifft ein Verfahren zum Aufrüsten und/oder Umrüsten einer Fördereinrichtung zur Förderung von Schüttgut. Das Verfahren umfasst den Schritt der Montage zumindest eines Mitnehmers zur Herstellung einer Fördereinrichtung wie oben beschrieben. Insbesondere wird ein Mitnehmer wie oben beschrieben montiert. Das Verfahren umfasst weiterhin optional den Schritt der Montage einer Zufuhreinrichtung wie oben beschrieben.

Dies hat den Vorteil, dass bereits installierte Fördereinrichtungen aufrüstbar und/oder umrüstbar sind zu einer erfindungsgemässen Fördereinrichtung, was kostengünstig ist, da keine Installation einer komplett neuen Fördereinrichtung notwendig wird.

Prinzipielle Erläuterungen, allgemeine Definitionen und besondere Merkmale, die in einem bestimmten Absatz (z.B. bezüglich der Fördereinrichtung) in der vorliegenden Anmeldung beschrieben wurden, gelten ebenso für andere Absätze (z.B. bezüglich des Förderelements) in dieser Anmeldung.

Weitere Merkmale und Vorteile der Erfindung werden nachfolgend anhand von Ausführungsbeispielen zum besseren Verständnis näher erläutert, ohne dass die Erfindung auf die Ausführungsbeispiele zu beschränken ist. Es zeigen:
- Figur 1:: perspektivische Darstellung einer erfindungsgemässen Fördereinrichtung;
- Figur 2:: Vorderansicht der erfindungsgemässen Fördereinrichtung gemäss Figur 1;
- Figur 3:: vergrösserte Darstellung des Antriebsabschnitts der erfindungsgemässen Fördereinrichtung gemäss Figur 1;
- Figur 4:: Vorderansicht eines Ausschnitts der erfindungsgemässen Fördereinrichtung gemäss Figur 1 umfassend den Antriebsabschnitt;
- Figur 5:: Ausschnitt einer erfindungsgemässen Fördereinrichtung umfassend zwei Mitnehmer in einem geraden Förderrohr;
- Figur 6:: Ausschnitt einer erfindungsgemässen Fördereinrichtung mit zwei Mitnehmern in einem gekrümmten Förderkanal;
- Figur 7:: photographische Darstellung zweier erfindungsgemässer Mitnehmer in Wirkverbindung in einer Förderrinne;
- Figur 8:: perspektivische Darstellung eines erfindungsgemässen Mitnehmers;
- Figur 9:: Seitenansicht des Mitnehmers gemäss Figur 8;
- Figur 10:: schematische Darstellung einer erfindungsgemässen Zufuhreinrichtung mit einem Förderkanal;
- Figur 11:: perspektivische Darstellung eines Teils einer alternativen erfindungsgemässen Fördereinrichtung mit Mitnehmern und Schüttgut;
- Figur 12:: schematische Darstellung einer Fördereinrichtung mit S-förmigem Förderrohr;
- Figur 13a:: eine perspektivische Ansicht einer weiteren Ausführungsform einer erfindungsgemässen Fördereinrichtung mit an einem Antriebskettenpaar angeordneten Mitnehmerbolzen;
- Figur 13b:: eine Draufsicht auf die Fördereinrichtung gemäss Figur 13a;
- Figur 14a:: eine perspektivische Ansicht einer weiteren Ausführungsform einer erfindungsgemässen Fördereinrichtung mit an zwei Antriebskettenpaaren angeordneten Mitnehmerbolzen;
- Figur 14b:: eine Draufsicht auf die Fördereinrichtung gemäss Figur 14a;
- Figur 15a:: eine perspektivische Ansicht einer weiteren Ausführungsform einer erfindungsgemässen Fördereinrichtung mit an einer Antriebskette angeordneten Mitnehmervorsprüngen;
- Figur 15b:: eine Draufsicht auf die Fördereinrichtung gemäss Figur 15a;
- Figur 16a:: eine perspektivische Ansicht einer weiteren Ausführungsform einer erfindungsgemässen Fördereinrichtung mit an zwei Antriebsketten angeordneten MitnehmervorSprüngen;
- Figur 16b:: eine Draufsicht auf die Fördereinrichtung gemäss Figur 16a;
- Figur 17a:: eine perspektivische Ansicht einer weiteren Ausführungsform einer erfindungsgemässen Fördereinrichtung mit einer Antriebsschnecke;
- Figur 17b:: eine Draufsicht auf die Fördereinrichtung gemäss Figur 17a;
- Figur 18a:: eine perspektivische Ansicht einer weiteren Ausführungsform einer erfindungsgemässen Fördereinrichtung mit zwei Antriebsschnecken;
- Figur 18b:: eine Draufsicht auf die Fördereinrichtung gemäss Figur 18a;
- Figur 19a:: eine Fördereinrichtung mit einem Viergelenkantrieb zu einem ersten Zeitpunkt;
- Figur 19b:: die Fördereinrichtung gemäss Figur 19a zu einem zweiten Zweitpunkt;
- Figur 20:: eine perspektivische Ansicht einer weiteren Ausführungsform einer erfindungsgemässen Fördereinrichtung mit zwei Antriebsketten;
- Figur 21:: eine perspektivische Ansicht einer weiteren Ausführungsform einer erfindungsgemässen Fördereinrichtung mit zwei Antriebbändern;
- Figur 22:: eine perspektivische Ansicht einer weiteren Ausführungsform einer erfindungsgemässen Fördereinrichtung mit zwei Antriebbändern;
- Figur 23:: eine perspektivische Ansicht einer weiteren Ausführungsform einer erfindungsgemässen Fördereinrichtung z.B. mit zwei Hydraulikelementen;
- Figur 24:: eine Ansicht einer weiteren Ausführungsform einer erfindungsgemässen Fördereinrichtung mit einem Zahnradantrieb in einem Innenbogenabschnitt des Förderkanals, insbesondere als Zwischenantrieb;
- Figur 25:: eine Ansicht einer weiteren Ausführungsform einer erfindungsgemässen Fördereinrichtung mit einem Koppelgetriebe;
- Figur 26a:: eine Ansicht einer Ausführungsform eines mechanischen Antriebs;
- Figur 26b:: einer Detail-Ansicht einer weiteren Ausführungsform eines mechanischen Antriebs;
- Figur 26c:: eine Ansicht der Ausführungsform aus Figur 26b;
- Figur 27a:: eine Ansicht eines Rohrausschnitts gemäß des Stands der Technik;
- Figur 27b:: eine perspektivische Ansicht eines Rohrausschnitts gemäß des Stands der Technik;
- Figur 28a:: eine Ansicht eines Rohrausschnitts z.B. als Zuführöffnung gemäß einer Ausführungsform der vorliegenden Erfindung
- .Figur 28b:: eine perspektivische Ansicht eines Rohrausschnitts z.B. als Zuführöffnung gemäß einer Ausführungsform der vorliegenden Erfindung
- Figur 29a:: eine Ansicht eines Rohrausschnitts z.B. als Auslassöffnung gemäß einer Ausführungsform der vorliegenden Erfindung;
- Figur 29b:: eine perspektivische Ansicht eines Rohrausschnitts z.B. als Auslassöffnung gemäß einer Ausführungsform der vorliegenden Erfindung;
- Figur 30a:: eine Ansicht eines Rohrausschnitts z.B. als Auslassöffnung gemäß einer Ausführungsform der vorliegenden Erfindung;
- Figur 30b:: eine perspektivische Ansicht eines Rohrausschnitts z.B. als Auslassöffnung gemäß einer Ausführungsform der vorliegenden Erfindung;
- Figur 31a:: eine Ansicht eines Rohrausschnitts z.B. als Auslassöffnung gemäß einer Ausführungsform der vorliegenden Erfindung;
- Figur 31b:: eine perspektivische Ansicht eines Rohrausschnitts z.B. als Auslassöffnung gemäß einer Ausführungsform der vorliegenden Erfindung;
- Figur 32a:: eine Ansicht eines Rohrausschnitts z.B. als Sichtfenster gemäß einer Ausführungsform der vorliegenden Erfindung;
- Figur 32b:: eine perspektivische Ansicht eines Rohrausschnitts z.B. als Sichtfenster gemäß einer Ausführungsform der vorliegenden Erfindung;
- Figur 33a:: eine erste Ansicht eines Rohrausschnitts z.B. als Antriebsöffnung gemäß einer Ausführungsform der vorliegenden Erfindung;
- Figur 33b:: eine zweite Ansicht eines Rohrausschnitts z.B. als Antriebsöffnung gemäß einer Ausführungsform der vorliegenden Erfindung;
- Figur 33c:: eine perspektivische Ansicht eines Rohrausschnitts z.B. als Antriebsöffnung gemäß einer Ausführungsform der vorliegenden Erfindung;
- Figur 34a:: eine erste Ansicht eines Rohrausschnitts z.B. als Antriebsöffnung gemäß einer Ausführungsform der vorliegenden Erfindung;
- Figur 34b:: eine zweite Ansicht eines Rohrausschnitts z.B. als Antriebsöffnung gemäß einer Ausführungsform der vorliegenden Erfindung;
- Figur 34c:: eine perspektivische Ansicht eines Rohrausschnitts z.B. als Antriebsöffnung gemäß einer Ausführungsform der vorliegenden Erfindung;
- Figur 35a:: eine erste Ansicht eines Rohrausschnitts z.B. als Antriebsöffnung gemäß einer Ausführungsform der vorliegenden Erfindung;
- Figur 35b:: eine zweite Ansicht eines Rohrausschnitts z.B. als Antriebsöffnung gemäß einer Ausführungsform der vorliegenden Erfindung;
- Figur 35c:: eine perspektivische Ansicht eines Rohrausschnitts z.B. als Antriebsöffnung gemäß einer Ausführungsform der vorliegenden Erfindung;
- Figur 36a:: eine Ansicht eines Rohrausschnitts z.B. als Einführöffnung für ein Förderelement gemäß einer Ausführungsform der vorliegenden Erfindung;
- Figur 36b:: eine perspektivische Ansicht eines Rohrausschnitts z.B. als Einführöffnung für ein Förderelement gemäß einer Ausführungsform der vorliegenden Erfindung
- Figur 36c:: eine perspektivische Ansicht eines Rohrausschnitts z.B. als Einführöffnung für ein Förderelement mit einem einzuführenden Förderelement.

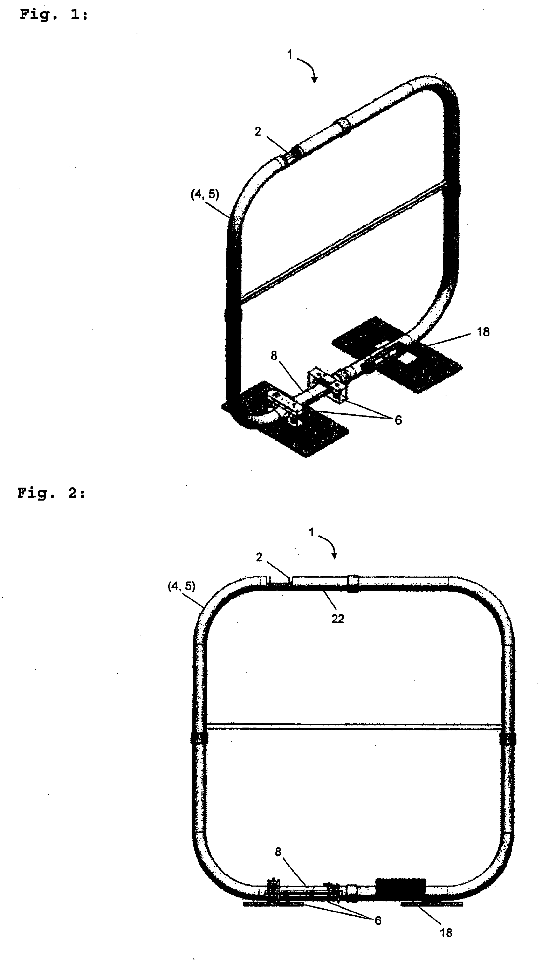

Im Folgenden werden zunächst Figuren 1 bis 19 beschrieben.

In Figur 1 ist in perspektivischer Darstellung eine erfindungsgemässe Fördereinrichtung 1 zur Förderung von Schüttgut dargestellt. Der Förderkanal 4 ist als Förderrohr 5 ausgebildet, welches beispielsweise aus Stahl oder Kunststoff bestehen kann. Der Förderkanal 4 ist umlaufend geschlossen ausgebildet, so dass im Förderkanal 4 angeordnete Mitnehmer (Förderelemente) 2 endlos umlaufen können.

In der Fördereinrichtung 1 ist eine Mehrzahl von Mitnehmern 2 angeordnet, die mittels des Antriebs 6 im Antriebsabschnitt 8 angetrieben werden. Die Mitnehmer sind entlang der Förderkanalachse lose im Förderkanal 4 angeordnet.

Schüttgut wird mittels der Zufuhreinrichtung 18 in den Förderkanal 4 gefördert.

In Figur 2 ist in einer Vorderansicht die Fördereinrichtung 1 gemäss Figur 1 dargestellt.

Gleiche Referenzzeichen bezeichnen im Folgenden gleiche Merkmale in den Figuren und werden deshalb nur bei Bedarf erneut erläutert.

In der Darstellung gemäss Figur 2 ist ein Auslass 22 dargestellt. Im Betrieb wird Schüttgut durch die Zufuhreinrichtung 18 in den Förderkanal 4 gefördert. Das im Förderkanal 4 sich befindende Schüttgut wird mittels der angetriebenen Mitnehmer 2 zum Auslass 22 gefördert, wo das Schüttgut aus der Fördereinrichtung 1 beispielsweise in einen hier nicht dargestellten Auffangbehälter fällt.

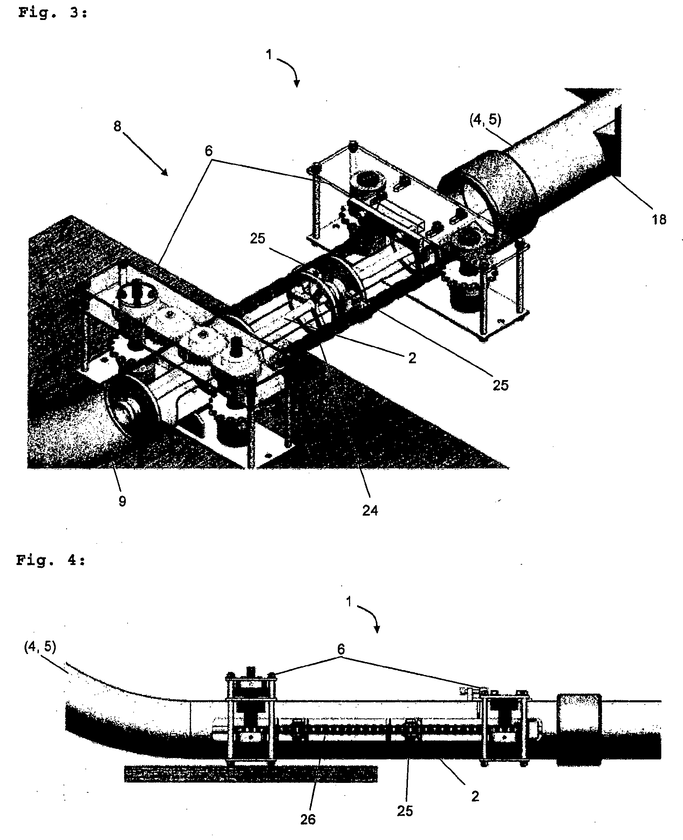

In Figur 3 ist in perspektivischer Darstellung der Bereich umfassend den Antriebsabschnitt 8 der Fördereinrichtung 1 gemäss Figur 1 dargestellt. Das Förderrohr 5 hat eine Innenwand 9, die als Führungseinrichtung entlang der Förderkanalachse für den Mitnehmer 2 wirkt.

Im Antriebsabschnitt 8 wird mittels Antriebsarmen 25 eine Kraft im Wesentlichen parallel zur Förderkanalachse auf die Mitnehmer 2 ausgeübt. Die Antriebsarme 25 werden mittels einer Antriebskette 2 4 im Antriebsabschnitt 8 im Wesentlichen parallel zur Förderkanalachse bewegt. Die Kraft wird im Wesentlichen in dem der Innenwand 9 des Förderkanals zugewandten Umfangsbereich des Mitnehmers 2 auf den Mitnehmer 2 ausgeübt.

In Figur 4 ist in einer Vorderansicht ein Teil des Ausschnitts der Fördereinrichtung 1 gemäss Figur 3 dargestellt.

Die mittels der Antriebskette 24 angetriebenen Antriebsarme 25 greifen in das Förderrohr 5 durch eine EingreifÖffnung 2 6 ein. Da eine Zuführung von Schüttgut erst stromabwärts des Antriebsabschnitts mit dem Antrieb 6 erfolgt, ist eine Abdichtung der EingreifÖffnung 2 6 nicht in jedem Fall notwendig.

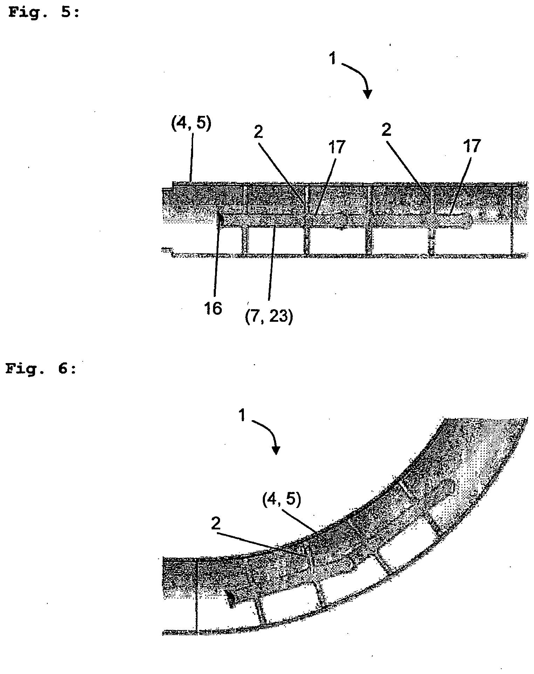

In Figur 5 ist schematisch ein Ausschnitt eines Förderkanals 4, welcher als Förderrohr 5 ausgebildet ist, umfassend zwei Mitnehmer 2 dargestellt. Die Mitnehmer 2 weisen auf der der Förderrichtung zugewandten Seite der Mitnehmer 2 Arme 17 auf, die als Abstandshalter dienen. Auf der der Förderrichtung abgewandten Seite weisen die Mitnehmer 2 Ausnehmungen 16 auf, in die gegebenenfalls ein benachbart angeordneter Mitnehmer 2 mit dem Arm 17 eingreifen kann.

Die Mitnehmer 2 umfassen Streben (Schafte) 23, die vorliegend im Wesentlichen parallel zur Förderkanalachse 7 angeordnet sind.

In Figur 6 ist schematisch ein Ausschnitt einer Fördereinrichtung mit gekrümmtem Förderkanal mit darin angeordneten Mitnehmern 2 dargestellt.

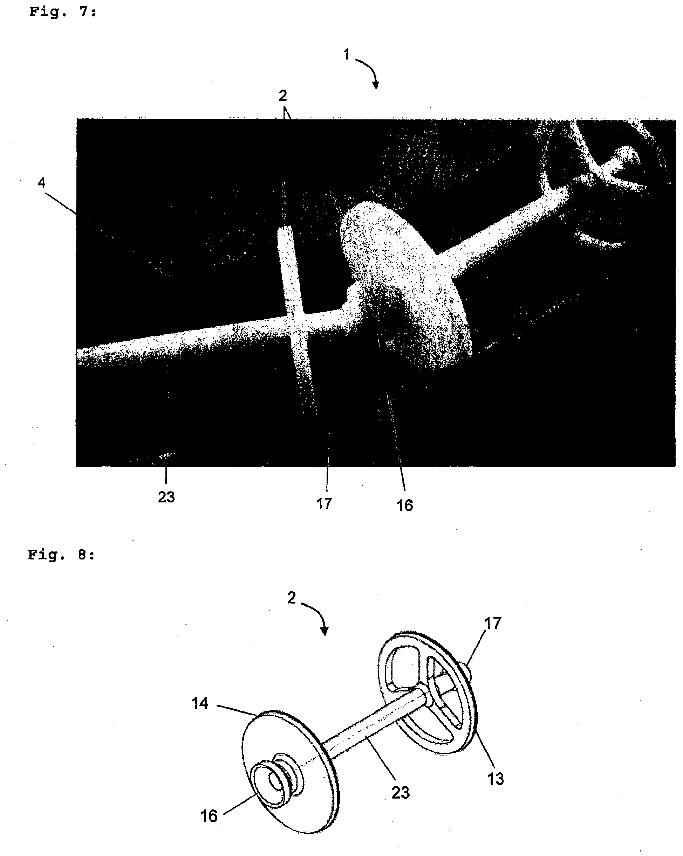

In Figur 7 ist photographisch ein Ausschnitt einer Fördereinrichtung 1 mit einem als Förderrinne ausgebildeten Förderkanal 4 dargestellt, in dem zwei Mitnehmer 2 mit Arm 17 und Ausnehmung 16 dargestellt sind in einem gekrümmten Abschnitt des Förderkanals.

In Figur 8 ist in perspektivischer Darstellung ein erfindungsgemässer Mitnehmer 2 dargestellt.

Der Mitnehmer 2 gemäss Figur 8 weist einen Arm 17 auf, der bei bestimmungsgemässem Gebrauch auf der der Förderrichtung zugewandten Seite in einem Förderkanal angeordnet wird.

Der Mitnehmer 2 weist ein erstes Flächenelement 13 auf, welches für Schüttgut durchlässig ist. Der Mitnehmer 2 weist weiterhin ein zweites Flächenelement 14 auf, welches die hier nicht gezeigte Mitnehmerfläche umfasst. Das erste Flächenelement 13 und das zweite Flächenelement 14 sind mittels einer Strebe (eines Schafts) 23 voneinander beabstandet angeordnet zur Wirkverbindung der beiden Flächenelemente.

Zudem weist der Mitnehmer 2 auf der der Förderrichtung abgewandten Seite des zweiten Flächenelements 14 eine Ausnehmung 16 auf, in die ein Arm 17 eines benachbart angeordneten Mitnehmers eingreifen kann.

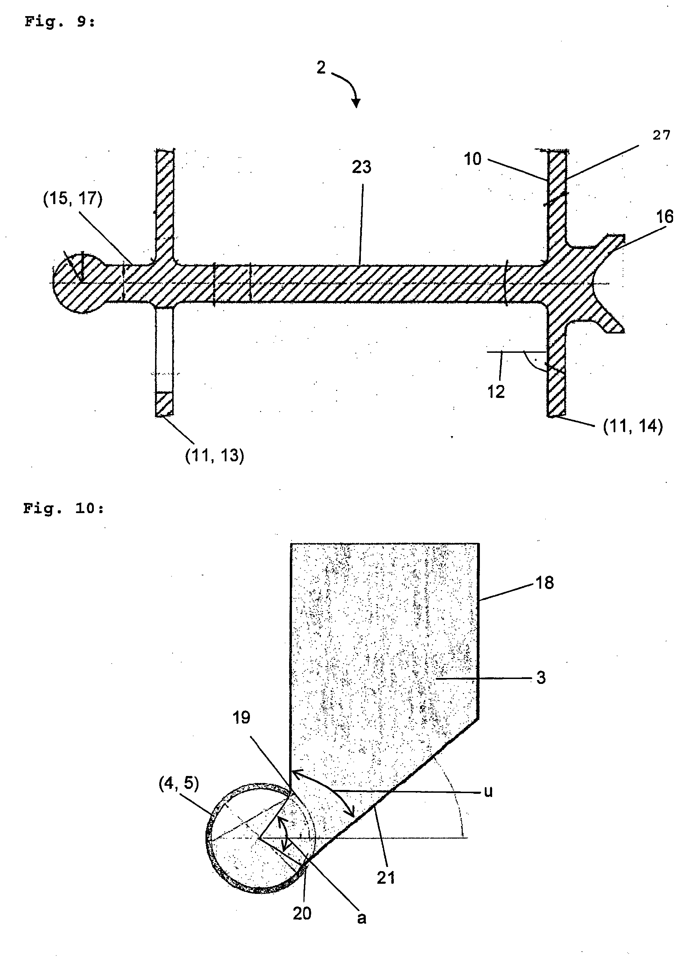

In Figur 9 ist in einer Seitenansicht der erfindungsgemässe Mitnehmer 2 gemäss Figur 8 dargestellt.

Der Mitnehmer 2 weist einen Abstandshalter 15 auf, der als Arm 17 ausgebildet ist. Der Arm 17 ist am vom Mitnehmer 2 abgewandten Ende kugelförmig ausgebildet. Auf der der Förderrichtung abgewandten Seite weist der Mitnehmer 2 eine Ausnehmung 16 auf, die abschnittsweise kugelförmig ausgebildet ist, so dass der kugelförmig ausgebildete Abstandshalter 15 in die komplementäre Ausnehmung 16 eines weiteren Mitnehmers eingreifen kann.

Das erste Flächenelement 13 und das zweite Flächenelement 14 sind mittels der Strebe (des Schafts) 23 miteinander wirkverbunden, wobei das erste Flächenelement 13 und das zweite Flächenelement 14 als Ausrichtungseinrichtung 11 wirken. Das erste Flächenelement 13 ist durchlässig für Schüttgut.

Das zweite Flächenelement 14 umfasst an einer ersten Seite die Mitnehmerfläche 10 zur Förderung des Schüttguts entlang des Förderkanals und an einer der ersten Seite gegenüberliegenden zweiten Seite eine Antriebsfläche 27. Die Antriebsfläche 27 kann elastisch ausgebildet sein und insbesondere aus Kunststoff oder Gummi bestehen. Alternativ kann die Antriebsfläche 27 jedoch auch aus Stahl bestehen. Auf diese Antriebsfläche 27 kann der Antrieb eine Kraft ausüben, um den Mitnehmer 2 anzutreiben.

Die vom Umfang des ersten Flächenelements 13 und des zweiten Flächenelements 14 umschlossenen Flächen sind bei einer Projektion im Wesentlichen parallel zur mittleren Oberflächensenkrechten 12 im Wesentlichen kongruent zueinander ausgebildet, was zur gewünschten Ausrichtung des Mitnehmers 2 im Förderkanal führt.

In Figur 10 ist eine erfindungsgemässe Zufuhreinrichtung 18 zur Zufuhr von Schüttgut 3 in ein Förderrohr 5 der Fördereinrichtung dargestellt in einer Seitenansicht.

Das Förderrohr 5 weist einen Einlass 19 auf, der einen Winkelbereich a von ca. 90 ° überstreicht. Mittels eines Schiebers 20, der als Drehschieber ausgebildet ist, kann der Winkelbereich a entsprechend den Anforderungen eingestellt werden.

Die Zufuhreinrichtung 18 weist einen Umlenkbereich 21 auf, der mit einem Umlenkwinkel u von ca. 50 ° bezogen auf die Schwerkraftrichtung angeordnet ist.

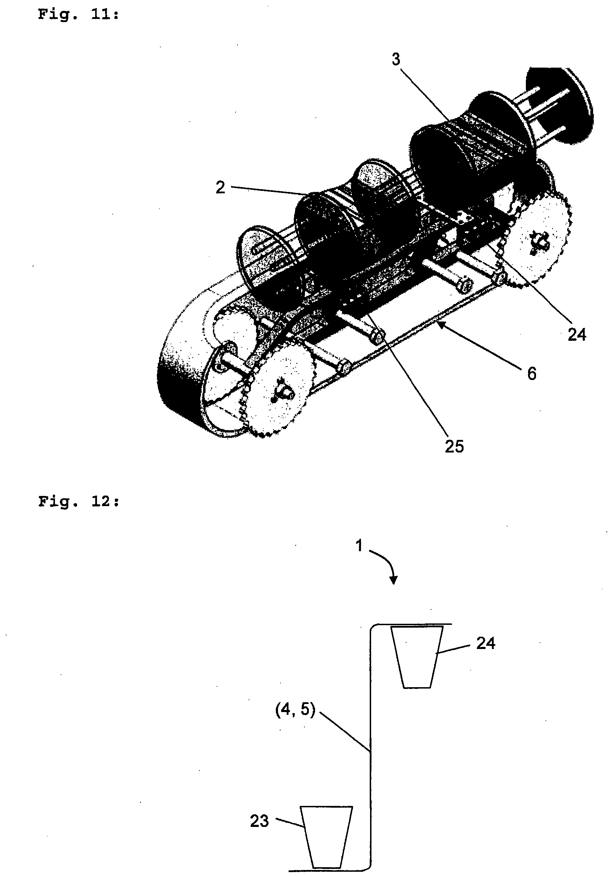

In Figur 11 ist in perspektivischer Darstellung ein Ausschnitt einer alternativen erfindungsgemässen Fördereinrichtung dargestellt. Zur besseren Übersicht wurde hier das Förderrohr ausgeblendet.

In dem Förderrohr ist eine Mehrzahl von Mitnehmern 2 angeordnet, wobei vorliegend drei Mitnehmer 2 sichtbar sind. Mittels einer Antriebskette 24 (nur abschnittsweise dargestellt) und daran angeordneter Antriebsarme 25 ist eine Kraft auf die Mitnehmer 2 im Wesentlichen parallel zur Förderkanalachse ausübbar. Die Mitnehmer 2 weisen keine Abstandshalter auf. Zwischen den Mitnehmern 2 ist Schüttgut 3 angeordnet, was zur vorliegenden gewünschten Beabstandung der Mitnehmer 2 führt.

In Figur 12 ist in schematischer Darstellung eine Seitenansicht einer Fördereinrichtung 1 mit einem Förderrohr 5 dargestellt. Das Förderrohr 5 ist S-förmig ausgebildet. In einem unteren Bereich ist ein Einlassbehälter 23 zur Zuführung von Schüttgut angeordnet, welches mittels nicht dargestellter Mitnehmer zum Auslassbehälter 24 gefördert wird. Der Einlass und der Auslass sind hier nicht dargestellt.

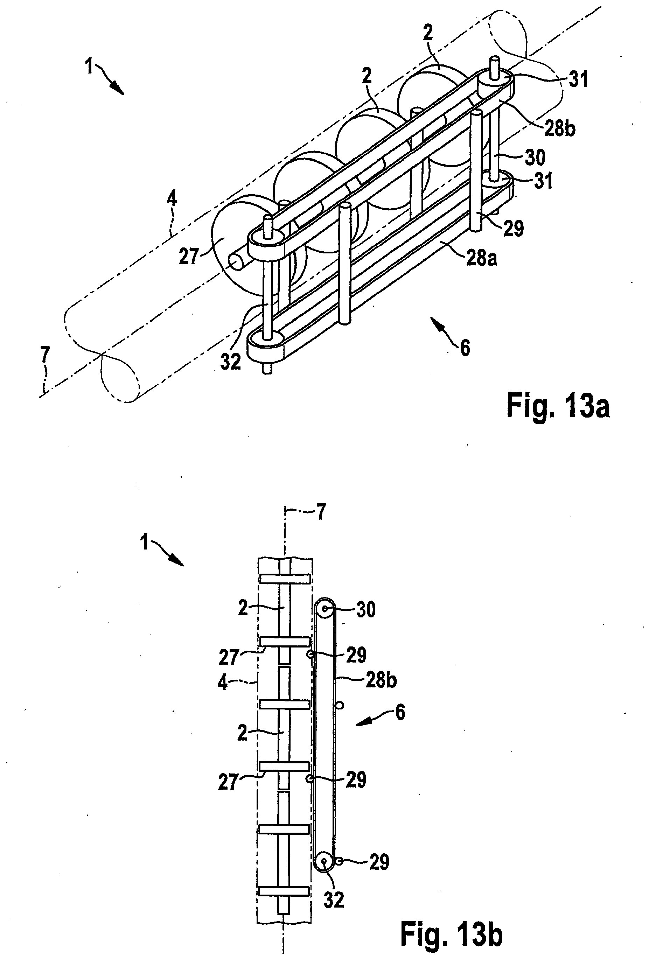

Die Fördereinrichtung 1 gemäss den Figuren 13a und 13b enthält ein Kettengetriebe 6 mit einem Antriebskettenpaar, welches aus einer unteren Antriebskette 28a und einer oberen Antriebskette 28b besteht. An diesen Antriebsketten 28a, 28b sind vier Mitnehmerbolzen 29 befestigt, wobei die jeweils unteren Enden der Mitnehmerbolzen 29 an der unteren Antriebskette 28a befestigt sind und die oberen Enden der Mitnehmerbolzen 2 9 an der oberen Antriebskette 28b. Auf diese Weise erstrecken sich die Mitnehmerbolzen 2 9 in einer vertikalen Richtung. Die beiden Antriebsketten 28a, 28b werden mit Hilfe einer Antriebswelle 30 und zweier daran befestigter Kettenräder 31 angetrieben. Am gegenüberliegenden Ende werden die Antriebsketten 28a, 28b mit Hilfe einer Umlenkachse 32 umgelenkt. Denkbar sind auch mehr oder weniger als vier Mitnehmerbolzen 29, die an den Antriebsketten 28a, 28b befestigt sind.

Durch Rotation der Antriebswelle 30 werden die Mitnehmerbolzen 2 9 entlang der Förderkanalachse 7 bewegt. Hierdurch geraten die Mitnehmerbolzen 2 9 in Kontakt mit den Antriebsflächen 27 der Mitnehmer 2 und treiben diese somit an.

Der Abstand zweier benachbarter Mitnehmerbolzen 29 ist etwa das 1,02-fache der Ausdehnung der Mitnehmer 2 entlang der Förderkanalachse 7 und damit im Sinne der obigen Definition im Wesentlichen identisch mit dieser Ausdehnung. Hierdurch kann bewerkstelligt werden, dass die Mitnehmer 2 während des Antreibens einander beinahe berühren. Eine Berührung wird jedoch verhindert, um unbeabsichtigte Kollisionen benachbarter Mitnehmer 2 zu verhindern. Zudem ist der Antriebsabschnitt entlang der Förderkanalachse 7 doppelt so lang wie die Mitnehmer 2. Somit befindet sich zu jedem Zeitpunkt mindestens ein Mitnehmer 2 vollständig im Antriebsabschnitt

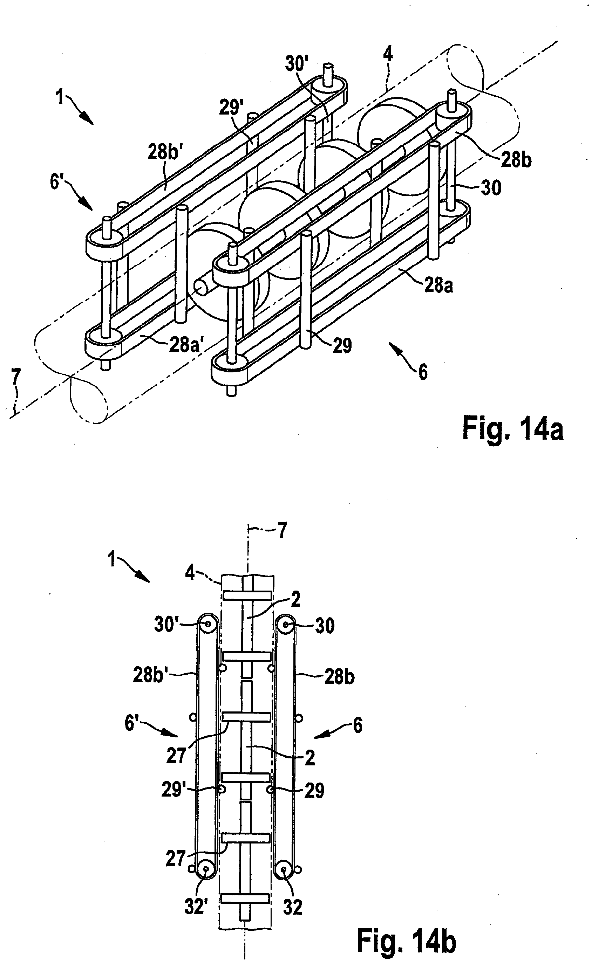

Das in den Figuren 14a und 14b gezeigte Ausführungsbeispiel enthält zwei Kettengetriebe 6 und 6' mit Antriebskettenpaaren 28a, 28b und 28a', 28b', die jeweils vier Mitnehmerbolzen 29 bzw. 29' aufweisen. Die beiden Antriebskettenpaare 28a, 28b und 28a' , 28b' sind an gegenüberliegenden Seiten des Förderkanals 4 angeordnet. Um eine synchrone Bewegung und eine vertikale Ausrichtung der Mitnehmerbolzen 29, 29' zu ermöglichen, können die beiden Antriebswellen 30, 30' über ein hier nicht dargestelltes Zahnradgetriebe von einem gemeinsamen Motor angetrieben werden.

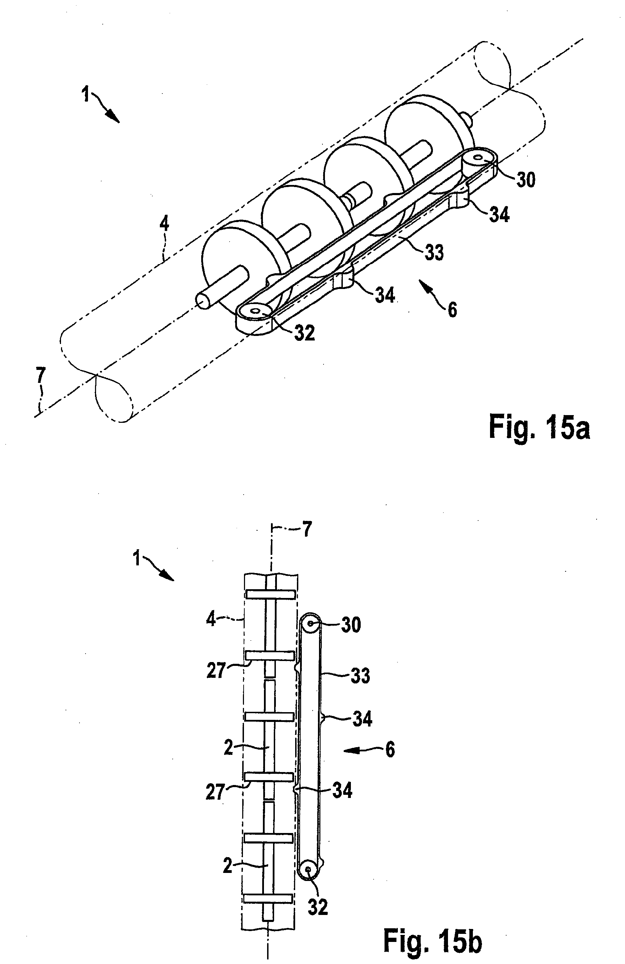

Das Kettengetriebe 6 im Ausführungsbeispiel gemäss den Figuren 15a und 15b enthält eine Antriebskette 33, welches von einer Antriebswelle 30 angetrieben und einer Umlenkachse 32 umgelenkt wird. An der Antriebskette 33 sind vier Mitnehmervorsprünge 34 angeschraubt, mittels deren die Mitnehmer 2 angetrieben werden können. Die Antriebskette 33 ist seitlich vom Förderkanal 4 angeordnet.

Der Abstand zweier benachbarter Mitnehmervorsprünge 34 ist etwa das 1,02-fache der Ausdehnung der Mitnehmer 2 entlang der Förderkanalachse 7 und damit im Sinne der obigen Definition im Wesentlichen identisch mit dieser Ausdehnung. Hierdurch kann bewerkstelligt werden, dass die Mitnehmer 2 während des Antreibens einander beinahe berühren. Zudem ist der Antriebsabschnitt auch in diesem Beispiel entlang der Förderkanalachse 7 doppelt so lang wie die Mitnehmer 2. Somit befindet sich zu jedem Zeitpunkt mindestens ein Mitnehmer 2 vollständig im Antriebsabschnitt.

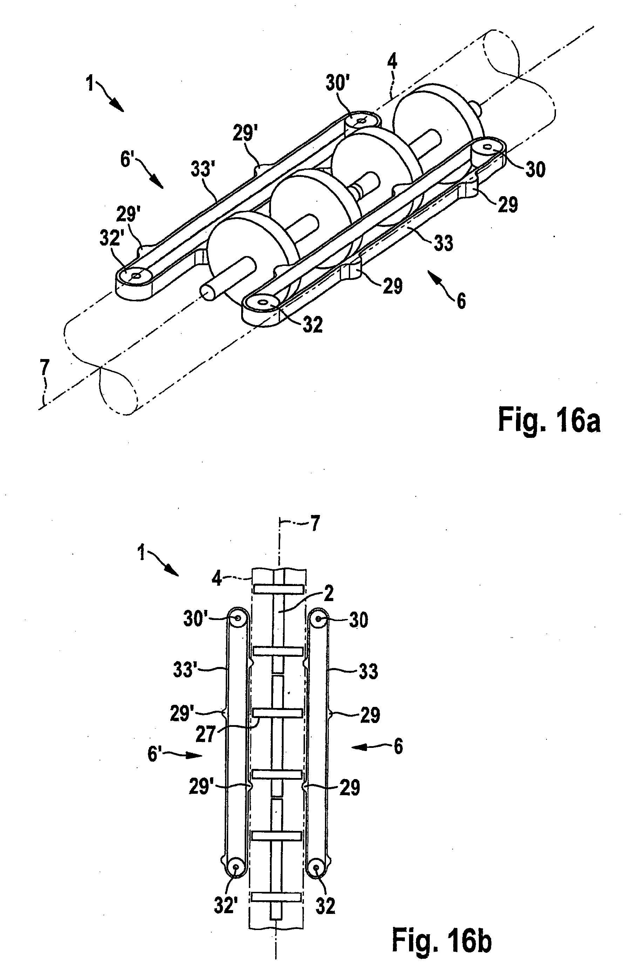

Im Gegensatz zu den Figuren 15a und 15b enthält die Fördereinrichtung 1 gemäss den Figuren 16a und 16b zwei gegenüberliegende Antriebsketten 33, 33' mit jeweiligen Antriebswellen 30 bzw. 30' und Umlenkachsen 32 bzw. 32' sowie Mitnehmervorsprüngen 34 bzw. 34'. Auch in diesem Ausführungsbeispiel kann die Synchronisation der beiden Antriebswellen 30 und 30' mit Hilfe eines hier nicht dargestellten Zahnradgetriebes erfolgen.

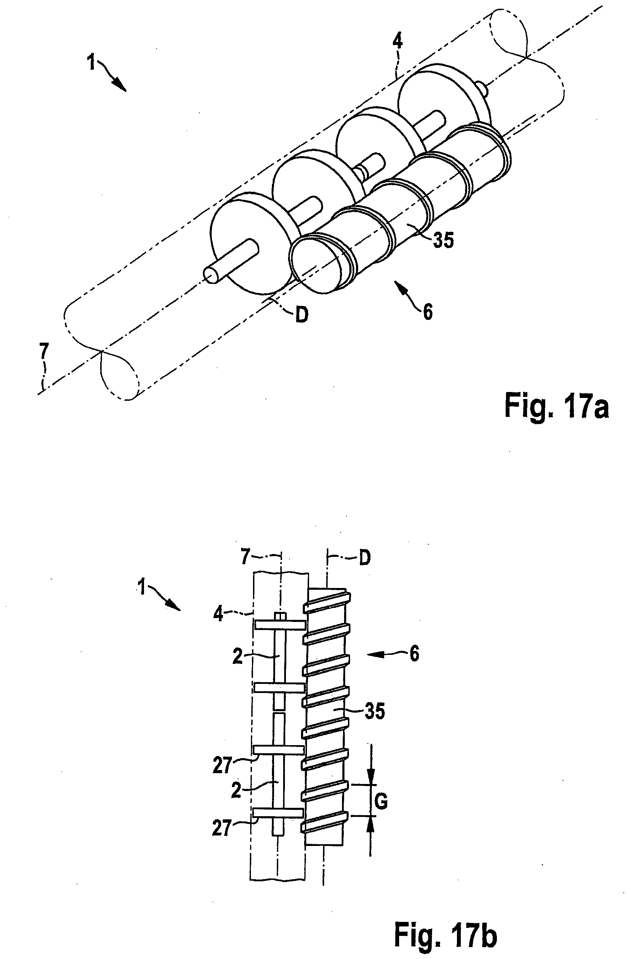

In den Figuren 17a und 17b dargestellten Ausführungsbeispiel ist der Antrieb als Schneckenantrieb 6 mit einer drehbaren Antriebsschnecke 35 ausgebildet, deren Drehachse D parallel zur Förderkanalachse 7 verläuft. In diesem Ausführungsbeispiel erfolgt der Antrieb der Mitnehmer 2 durch Drehung der Antriebsschnecke 35 um ihre Drehachse D.

Die Ausdehnung der Mitnehmer 2 entlang der Förderkanalachse 7 ist etwa das 3,9-fache der Ganghöhe G der Antriebsschnecke 35. Hierdurch kann bewerkstelligt werden, dass die Mitnehmer 2 während des Antreibens einander beinahe berühren.

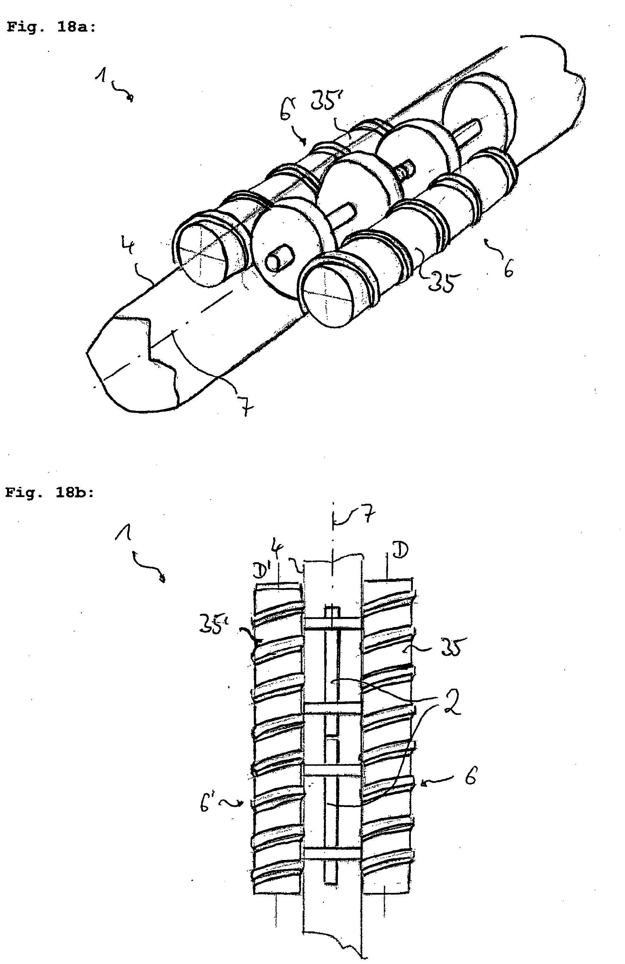

Das in den Figuren 18a und 18b dargestellte Ausführungsbeispiel zeigt zwei Antriebsschnecken 35, 35' mit jeweiligen Drehachsen D, D', welche parallel zur Förderkanalachse 7 verlaufen. Auch hier kann die Synchronisation der beiden Antriebsschnecken 35, 35'über ein hier nicht dargestelltes Zahnradgetriebe erfolgen.

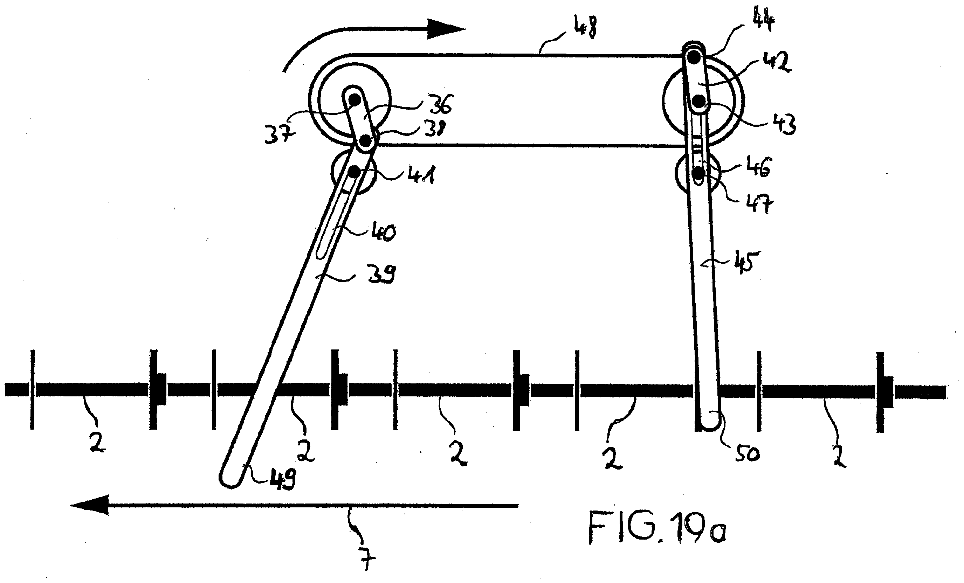

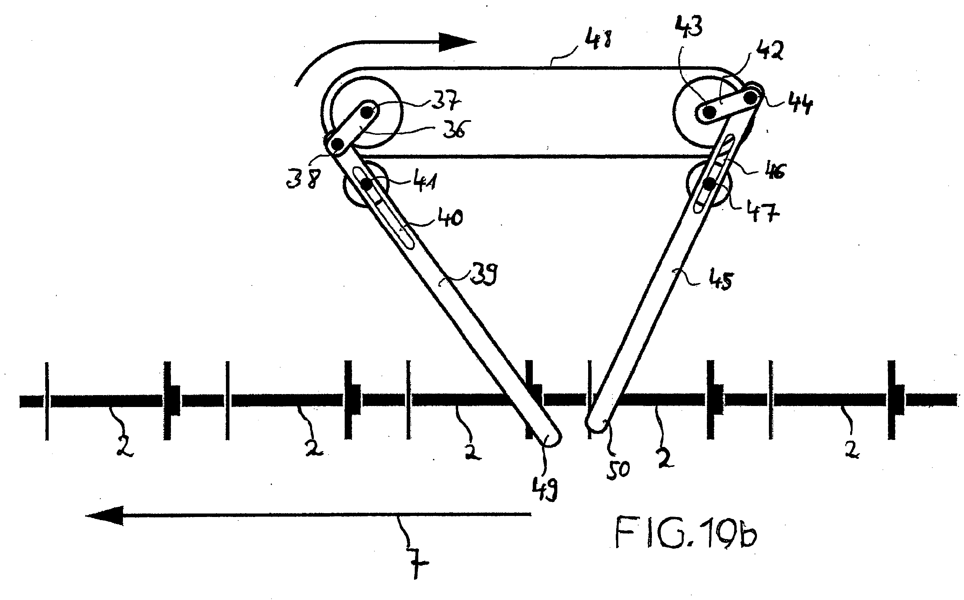

In den Figuren 19a und 19b ist ein als Viergelenkantrieb ausgebildeter Antrieb 4 dargestellt. Ein erstes Ende eines ersten Hebels 36 ist an einer ersten Antriebswelle 37 befestigt, während ein zweites Ende des ersten Hebels 36 über ein Gelenk 38 mit einem ersten Ende eines zweiten Hebels 39 drehbar verbunden ist. Der zweite Hebel 39 enthält einen Schlitz 40, in den ein Stift 41 eingreift, wodurch eine Führung des zweiten Hebels 39 ermöglicht wird. Des Weiteren ist ein erstes Ende eines dritten Hebels 42 an einer zweiten Antriebswelle 43 befestigt, während ein zweites Ende des dritten Hebels 42 über ein Gelenk 44 mit einem ersten Ende eines vierten Hebels 45 drehbar verbunden ist. Der vierte Hebel 45 enthält einen Schlitz 46, in den ein Stift 47 eingreift, wodurch eine Führung des vierten Hebels 45 ermöglicht wird. Die erste Antriebswelle 37 und die zweite Antriebswelle 43 werden durch einen gemeinsamen Antriebsriemen 4 8 angetrieben, wodurch eine Synchronisation der Antriebswellen 37, 43 erreicht wird.

Die Figuren 19a und 19b zeigen den Antrieb 6 zu zwei verschiedenen Zeitpunkten. Der Antrieb 6 ist derart ausgebildet und angeordnet, dass abschnittsweise mittels eines zweiten Endes 4 9 des zweiten Hebels 39 und eines zweiten Endes 50 des vierten Hebels 45 eine Kraft parallel zur Förderkanalachse 7 auf Mitnehmer 2 ausübbar ist, wenn sich der Antrieb 6 durch Bewegung des Antriebsriemens 48 bewegt. Zudem ist der Antrieb 6 derart ausgebildet und angeordnet, dass das zweite Ende 49 des zweiten Hebels 39 so lange eine Kraft auf einen ersten Mitnehmer 2 ausübt, bis das zweite Ende 50 des vierten Hebels 45 beginnt, eine Kraft auf einen zweiten Mitnehmer 2 auszuüben und umgekehrt. Der Antriebsabschnitt hat in diesem Ausführungsbeispiel die Länge eines Mitnehmers 2.

Alternativ zu dem in den Figuren 19a und 19b dargestellten Ausführungsbeispiel kann die Bewegung von Hebeln auch über mindestens eine Kulisse, bevorzugt über mindestens zwei Kulissen, gesteuert werden, die entweder die Hebel mit senkrecht beweglichen Mitnehmerbolzen direkt über den Mitnehmern führt oder indirekt im Antrieb platziert ist.

Die vorliegende Erfindung umfasst somit zunächst u.a. die folgenden Aspekte:
1. Fördereinrichtung (1) umfassend einen Förderkanal (4), insbesondere ein Förderrohr (5), zumindest einen im Förderkanal (4) angeordneten Mitnehmer (2), insbesondere zumindest zwei Mitnehmer (2), und zumindest einen Antrieb (6) zum Antreiben des zumindest einen Mitnehmers (2) zur Förderung von Schüttgut (3) entlang einer Förderkanalachse (7), dadurch gekennzeichnet, dass der zumindest eine Mitnehmer zumindest abschnittsweise entlang der Förderkanalachse (7) lose im Förderkanal (4) angeordnet ist.
2. Fördereinrichtung (1) nach Aspekt 1, dadurch gekennzeichnet, dass der Förderkanal (4) als Führungseinrichtung entlang der Förderkanalachse (7) für den Mitnehmer (2) ausgebildet ist.
3. Fördereinrichtung (1) nach Aspekt 1 oder 2, dadurch gekennzeichnet, dass der Antrieb (6) derart ausgebildet ist, dass zumindest abschnittsweise eine Kraft im Wesentlichen parallel zur Förderkanalachse (7) durch den Antrieb (6) direkt auf den Mitnehmer (2) ausübbar ist.
4. Fördereinrichtung (1) nach einem der Aspekte 1 bis 3, dadurch gekennzeichnet, dass der Antrieb (6) zumindest in einem Antriebsabschnitt (8) in den Förderkanal (4) eingreift zur Ausübung einer Kraft im Wesentlichen parallel zur Förderkanalachse (7) auf einen im Antriebsabschnitt (8) angeordneten Mitnehmer (2).
5. Fördereinrichtung (1) nach einem der Aspekte 1 bis 4, dadurch gekennzeichnet, dass der Antrieb (6) aus der Liste der folgenden Antriebsarten oder beliebigen Kombinationen daraus auswählbar oder ausgewählt ist: Kettengetriebe, Riementriebe, Koppelgetriebe, Zahnradgetriebe, Schneckengetriebe, Magnetgetriebe, Servoantriebe, Direktantriebe.
6. Fördereinrichtung (1) nach einem der Aspekte 3 bis 5, dadurch gekennzeichnet, dass der Antrieb (6) mindestens einen Mitnehmerbolzen (29, 29') aufweist, mittels dessen zumindest abschnittsweise eine Kraft im Wesentlichen parallel zur Förderkanalachse (7) direkt auf den Mitnehmer (2) ausübbar ist.
7. Fördereinrichtung (1) nach Aspekt 6, dadurch gekennzeichnet, dass der Antrieb als Kettengetriebe (6) ausgebildet ist und mindestens ein Antriebskettenpaar (28a, 28b; 28a', 28b') aufweist, wobei jedes von zwei gegenüberliegenden Enden des Mitnehmerbolzens (29, 29') an jeweils einer Antriebskette (28a, 28b; 28a', 28b') des Antriebskettenpaares (28a, 28b; 28a', 28b') befestigt ist.
8. Fördereinrichtung (1) nach einem der Aspekte 3 bis 7, dadurch gekennzeichnet, dass der Antrieb als Kettengetriebe (6) ausgebildet ist und mindestens eine Antriebskette (33, 33') aufweist, die mindestens einen Mitnehmervorsprung (34, 34') aufweist, mittels dessen zumindest abschnittsweise eine Kraft im Wesentlichen parallel zur Förderkanalachse (7) direkt auf den Mitnehmer (2) ausübbar ist.
9. Fördereinrichtung (1) nach einem der Aspekte 3 bis 8, dadurch gekennzeichnet, dass der Antrieb als Schneckengetriebe (6) ausgebildet ist und mindestens eine drehbare Antriebsschnecke (35, 35') aufweist, mittels deren Drehbewegung zumindest abschnittsweise eine Kraft im Wesentlichen parallel zur Förderkanalachse (7) direkt auf den Mitnehmer (2) ausübbar ist.
10. Fördereinrichtung (1) nach einem der vorstehenden Aspekte, dadurch gekennzeichnet, dass eine Kraftübertragung zwischen zwei im Förderkanal (4) parallel zur Förderkanalachse (7) benachbart angeordneten Mitnehmern (2) mittels direkten Kontakts zwischen den Mitnehmern (2) und/oder durch zwischen den Mitnehmern (2) im Förderkanal angeordnetes Schüttgut erzielbar ist.
11. Mitnehmer (2) zur Förderung von Schüttgut (3) in einer Fördereinrichtung (1) gemäss einem der vorstehenden Aspekte, umfassend eine Mitnehmerfläche (10), dadurch gekennzeichnet, dass der Mitnehmer (2) eine Ausrichtungseinrichtung (11) umfasst zur zumindest abschnittsweisen Ausrichtung der mittleren Oberflächensenkrechten (12) der Mitnehmerfläche (10) im Wesentlichen parallel zur Förderkanalachse (7).
12. Mitnehmer (2) nach Aspekt 11, dadurch gekennzeichnet, dass bei Ausrichtung der mittleren Oberflächensenkrechten (12) der Mitnehmerfläche (10) im Wesentlichen parallel zur Förderkanalachse (7) die Mitnehmerfläche (10) den mittleren Förderkanalquerschnitt zu kleiner 100 % abdeckt, bevorzugt im Bereich von 50 % bis 99,9 % und besonders bevorzugt von 80 bis 99,9 %.
13. Mitnehmer (2) nach Aspekt 11 oder 12, dadurch gekennzeichnet, dass die Ausrichtungseinrichtung (11) als zumindest ein erstes Flächenelement (13) und ein zweites Flächenelement (14) ausgebildet ist, die voneinander im Wesentlichen parallel zur Förderkanalachse (7) beabstandet und miteinander wirkverbunden angeordnet sind, wobei die mittleren Oberflächensenkrechten (12) der Flächenelemente im Wesentlichen parallel zur Förderkanalachse (7) angeordnet sind.
14. Mitnehmer (2) nach Aspekt 13, dadurch gekennzeichnet, dass das der Förderrichtung des Schüttguts (3) zugewandte erste Flächenelement (13) für das Schüttgut (3) durchlässig ist, wobei insbesondere das zweite Flächenelement (14) die Mitnehmerfläche (10) umfasst.
15. Mitnehmer (2) nach einem der Aspekte 11 bis 14, dadurch gekennzeichnet, dass der Mitnehmer (2) auf der der Förderrichtung zugewandten und/oder abgewandten Seite einen Abstandshalter (15) aufweist, insbesondere einen im Wesentlichen parallel zur Förderkanalachse (7) angeordneten Arm (17), der insbesondere am vom Mitnehmer (2) abgewandten Ende kugelförmig oder kalottenförmig ausgebildet ist.
16. Mitnehmer (2) nach Aspekt 15, dadurch gekennzeichnet, dass der Mitnehmer (2) auf der der Förderrichtung zugewandten oder abgewandten Seite eine Ausnehmung (16) aufweist, die derart ausgebildet ist, dass der Abstandshalter (15) in die Ausnehmung (16) eingreifen kann, wobei die Ausnehmung (16) insbesondere trichterförmig ausgebildet ist, und wobei die Ausnehmung (16) bevorzugt zumindest abschnittsweise kugelförmig und/oder zumindest abschnittsweise parabelförmig ausgebildet ist.
17. Verfahren zum Fördern von Schüttgut (3) mit einer Fördereinrichtung (1) gemäss einem der Aspekte 1 bis 10, optional mit einem Mitnehmer (2) gemäss einem der Aspekte 11 bis 16, weiter optional mit einer Zufuhreinrichtung (18), umfassend den Schritt der Förderung des Schüttguts (3) von einem Einlass (19) zu einem Auslass (22).
18. Verfahren zum Aufrüsten und/oder Umrüsten einer Fördereinrichtung (1) zur Förderung von Schüttgut (3), umfassend den Schritt der Montage zumindest eines Mitnehmers (2), insbesondere eines Mitnehmer (2) gemäss einem der Aspekte 11 bis 16, zur Herstellung einer Fördereinrichtung (1) gemäss einem der Aspekte 1 bis 10 und optional den Schritt der Montage einer Zufuhreinrichtung (18).

Zum Beispiel auch auf Grundlage der oben bereits erfolgten grundsätzlichen Erläuterungen, allgemeinen Definitionen und Merkmale, sowie der Erläuterungen zu den Zeichnungen geht die vorliegende Erfindung von dem Grundgedanken aus, dass Schüttgut in einem Förderkanal, z.B. einem Förderrohr, durch sich lose in dem Förderkanal befindende Förderelemente gefördert wird, die in dem Förderkanal in Förderrichtung geschoben bzw. gedrückt werden und dabei das Schüttgut durch den Förderkanal bewegen. Hierbei handelt es sich bei den Förderelementen um separate Einzelkörper bzw. (Schüttgut-)Mitnehmer, die z.B. während der Schüttgutförderung in dem Förderkanal (nur) kraftschlüssig miteinander in Verbindung stehen. Zum Beispiel kann hierbei in Abschnitten des Förderkanals, an denen sich keine Antriebseinrichtung befindet, ein sich in dem Förderkanal in Förderrichtung bewegendes Förderelement ein vor diesem sich befindendes Förderelement durch den Förderkanal schieben bzw. drücken.

Das grundlegende Konzept, bei dem der Druck von einem Förderelement auf das in Förderrichtung nächste Förderelement übertragen wird, zeichnet sich gegenüber bekannten Rohrkettenförderern durch seine verbesserte Energieeffizienz, erhöhte Fördergeschwindigkeit und - Leistung, bessere Hygiene und schonendere Förderung des Schüttguts aus. Hierbei wird die erhöhte Energieeffizienz z.B. dadurch erreicht, dass im Vergleich zu Rohrkettenförderern sehr reibungsarm transportiert wird. Zudem kann lediglich eine Antriebseinrichtung nötig sein, die insbesondere in einem ersten Abschnitt des Förderkanals vorgesehen ist und somit nicht mit dem Schüttgut in Verbindung kommt, das erst in einem zweiten Abschnitt des Förderkanals in diesen zugeführt wird. Zusätzlich können mit dem erfindungsgemäßen Konzept ein Verfahren und eine Fördereinrichtung bereitgestellt werden, die für die Förderung verschiedenster Schüttgüter, wie Reis, Mehl, Körner, Mais und Weizen eingesetzt werden können. Zum Beispiel wurden bisher für Reis Rohrkettenförderer, für Mehl Kübelförderer und für Körner Becherfördersysteme eingesetzt, jedoch scheiden zumindest für den Reistransport aufgrund der Explosionsschutzproblematik, der Unfallgefahr aufgrund von Quetsch- und Scherstellen und aus Platz- und Kostengründen aus. Auf der anderen Seite konnten die Rohrkettenförderer zwar die Anforderungen für Reisanwendungen einigermaßen abdecken, jedoch scheidet ein Rohrkettenförderer bei Mehl aus Hygienegründen und bei Korn aus Gründen der Förderleistung aus. Mit der vorliegenden Erfindung können all diese Schüttgüter einfach und problemlos, hygienisch und hocheffizient gefördert werden.

Die Erfindung löst die oben beschriebenen Aufgaben mit den Merkmalen der Patentansprüche.

Die vorliegende Erfindung betrifft eine Fördereinrichtung und ein Verfahren zum Fördern von Schüttgut mittels einer Fördereinrichtung mit einem Förderkanal und mindestens zwei sich lose in dem Förderkanal befindenden Förderelementen. In einem ersten Abschnitt des Förderkanals werden die Förderelemente in Förderrichtung mechanisch angetrieben, d.h. über direkten (berührenden) Kontakt mit einer Antriebseinrichtung.

In einer Ausführungsform steht während des Antreibevorgangs jeweils ein Förderelement über eine Öffnung in dem ersten Abschnitt des Förderkanals mit mindestens einem Antriebselement in direktem Kontakt. Insbesondere befindet sich im Wesentlichen außerhalb des Förderkanals (oder des Förderrohrs, wobei das Förderrohr mindestens in einem Abschnitt nach Zuführung des Schüttguts über seinen Querschnitt geschlossen ist) eine Antriebseinrichtung, die durch die Öffnung im ersten Abschnitt des Förderkanals eine direkte Kraft über ihr mindestens ein Antriebselement auf die Förderelemente ausüben kann und diese somit in Förderrichtung durch den ersten Abschnitt des Förderkanals schiebt/drückt.

Zum Beispiel kann mindestens ein Förderelement wie oben beschrieben zwei Scheiben und einen senkrecht zu diesen verlaufenden Schaft aufweisen, der die Scheiben mittig verbindet und der zumindest im ersten Abschnitt des Förderkanals parallel zur Förderrichtung ausgerichtet ist. Der Abstand der Scheiben des Förderelements in Förderrichtung kann hierbei größer (z.B. 1 mm bis 5 mm größer, 2 mm bis 3 mm größer, oder insbesondere ca. 2 mm größer) sein als die halbe Länge des Förderelements in Förderrichtung.

In einer Ausführungsform werden die Förderelemente im ersten Abschnitt des Förderkanals durch direkten Kontakt auf eine der Scheiben und/oder beide Scheiben und/oder den Schaft angetrieben. Insbesondere greift während des Antriebs ein Antriebselement an der in Förderrichtung hinteren Scheibe (Räumerscheibe, die die oben beschriebene Mitnehmerfläche aufweist) des Förderelements an und schiebt somit das Förderelement durch den ersten Abschnitt des Förderkanals.

In einer Ausführungsform werden die Förderelemente im Übergangsbereich zwischen dem ersten und dem zweiten Abschnitt des Förderkanals durch direkten Kontakt auf die in Förderrichtung hintere Scheibe (Räumerscheibe) des Förderelements angetrieben. Auf diese Weise wird das Förderelement über die stabilere Räumerscheibe durch den ersten Abschnitt des Förderkanals geschoben. Demnach kann vermieden werden, dass die gesamte Last aus davorliegenden Förderelementen und Schüttgut im zweiten und dritten Abschnitt des Förderkanals auf der vorderen, insbesondere durch Aussparungen geschwächten, Scheibe (Führungsscheibe) aufliegt.

In einer Ausführungsform sind pro Länge eines Förderelements in Förderrichtung über die Öffnung im ersten Abschnitt des Förderkanals mindestens zwei Antriebselemente bereitgestellt. Zum Beispiel weist die Antriebseinrichtung die mindestens zwei Antriebselemente auf, wobei der Abstand der Antriebselemente in Förderrichtung der halben Länge eines Förderelements entspricht.

Da pro Länge eines Förderelements nicht nur ein, sondern zwei Antriebselemente für den Antrieb des Förderelements vorgesehen sind, kann zudem ein falsches Eintakten der Antriebselemente und somit eine Beschädigung des Förderelements vermieden werden. Insbesondere beträgt der Abstand zwischen zwei Antriebselementen eine halbe Förderelementlänge in Förderrichtung, während der Abstand zwischen der Räumerscheibe zu der vorderen Scheibe (Führungsscheibe, die z.B. mehrere Aussparungen aufweist wie oben beschrieben) des Förderelements größer als die halbe Länge des Förderelements ist.

Bei einem Abstand zwischen zwei Antriebselementen, der der Länge eines Förderelements entspricht, ist es möglich, dass ein Antriebselement falsch in das Förderelement eingreift und so z.B. das Förderelement an seiner Führungsscheibe und eben nicht an seiner Räumerscheibe in dem Förderkanal in Förderrichtung voranschiebt. Eine derartige Fehltaktung kann insbesondere dann geschehen, wenn die Länge des umlaufend geschlossenen Führungskanals größer ist als die Summe der Längen der einzelnen Förderelemente in dem Förderkanal. Allerdings kann es vorteilhaft sein, dass die Summe der Längen der Förderelemente geringer als die Länge des Förderkanals ist, um z.B. größere Mengen Schüttgut zu fördern. Würde das Förderelement in diesem Fall auf ein davorliegendes Förderelement in einem Übergangsbereich zwischen dem ersten und zweiten Abschnitt des Förderrohrs auflaufen, stände die gesamte Last aus davorliegenden Förderelementen und Schüttgut auf der (schwächeren) Führungsscheibe, so dass diese beschädigt oder sogar zerstört werden könnte.

Bei einem Abstand zwischen zwei Antriebselementen, der der halben Länge eines Förderelements entspricht, wobei der Abstand zwischen Räumerscheibe und Führungsscheibe eines Förderelements etwas größer als die halbe Länge des Förderelements ist, schiebt in dem obigen Fall das Antriebselement ebenfalls die Führungsscheibe in dem ersten Abschnitt des Förderkanals in Förderrichtung voran. Allerdings bremst das Förderelement in dem Moment, in dem es auf ein davorliegendes Förderelement in einem Übergangbereich zwischen dem ersten Abschnitt und dem zweiten Abschnitt trifft, kurzzeitig ab, und die Last wechselt von dem Antriebselement an der Führungsscheibe auf das darauf folgende Antriebselement, das in diesem Moment an der (stärkeren) Räumerscheibe angreift.

Auf diese Weise kann eine Fehltaktung bei Einlaufen eines vereinzelten Förderelements (im Gegensatz zu dem Kraftverbund zwischen den Förderelementen, der in dem zweiten und dritten Abschnitt des Förderkanals existiert) im ersten Abschnitt des Förderkanals vermieden werden.

In einer Ausführungsform sind die Antriebselemente die oben beschriebenen (Mitnehmer-)Bolzen und/oder die oben beschriebenen Mitnehmervorsprünge und/oder Hydraulikelemente und/oder Druckluftelemente. Hierbei können zwei in Förderrichtung hintereinander angeordnete Hydraulikelemente und/oder Druckluftelemente derart geschaltet sein, dass sie abwechselnd eine Kraft auf das Förderelement ausüben und/oder gleichzeitig an unterschiedlichen Stellen (etwa an der Führungsscheibe und an der Räumungsscheibe) eine Kraft auf das Förderelement ausüben.

Erfindungsgemäß wird in einem zweiten Abschnitt des Förderkanals, der vorzugsweise an den ersten Abschnitt des Förderkanals grenzt, Schüttgut in den Förderkanal über eine Zuführöffnung, z.B. von einer Zuführeinrichtung, zugeführt. Das Schüttgut wird dann durch Bewegung der Förderelemente entlang der Förderrichtung in einem dritten Abschnitt des Förderkanals gefördert, wobei in diesem dritten Abschnitt des Förderkanals, und insbesondere auch in dem zweiten Abschnitt des Förderkanals, das erste Förderelement von dem zweiten Förderelement und/oder dem Schüttgut durch den Förderkanal in Förderrichtung gedrückt bzw. geschoben wird. Das Schüttgut wird z.B. von einer Zuführöffnung zum Zuführen des Schüttguts in den Förderkanal in dem zweiten Abschnitt bis hin zu einem Auslass in dem Förderkanal am Ende des dritten Abschnitts gefördert, wobei die Förderelemente durch den Förderkanal mittels des Antriebs im ersten Abschnitt und dem Kraftschluss zwischen den Förderelementen in dem zweiten und dritten Abschnitt geschoben werden. Der Kraftschluss findet hierbei zwischen den jeweiligen Enden der Förderelemente in Förderrichtung und gegebenenfalls über das zugeführte Schüttgut zwischen diesen Enden statt, so dass Förderelemente und Schüttgut durch den Förderkanal gedrückt werden.

Die Erfindung betrifft zudem die oben bereits u.a. im Zusammenhang mit dem Verfahren beschriebene Fördereinrichtung mit einem Förderkanal und mindestens zwei Förderelementen und umfasst die mechanische Antriebseinrichtung zum Antreiben der Förderelemente in Förderrichtung in einem ersten Abschnitt des Förderkanals, wobei sich die Förderelemente lose in dem Förderkanal befinden und eine Zuführöffnung zum Zuführen von Schüttgut in den Förderkanal in einem zweiten Abschnitt des Förderkanals. Hierbei ist die Fördereinrichtung derart konfiguriert, das oben beschriebene Verfahren auszuführen, insbesondere derart, dass in einem dritten Abschnitt des Förderkanals das erste Förderelement von dem zweiten Förderelement und/oder Schüttgut durch den Förderkanal in Förderrichtung gedrückt wird.

In einer Ausführungsform hat der Förderkanal in seinem zweiten Abschnitt eine Öffnung, durch die das Schüttgut von einer Zuführeinrichtung in den Förderkanal zugeführt werden kann. Diese Zuführöffnung ist (insbesondere in einem Längsschnitt des Förderkanals betrachtet) nicht rechteckig. Zum Beispiel kann die Breite der Zuführöffnung (bzw. die Länge der Bogenkante der Öffnung in dem Förderrohr) an der in Förderrichtung hintersten Stelle der Zuführöffnung geringer sein als an einer anderen Stelle der Zuführöffnung.

Eine derartige Gestaltung der Zuführöffnung hat den Vorteil, dass Stoßkanten bei Rohrausschnitten vermieden werden können. Zum Beispiel können Öffnungen im dem Förderkanal derart konfiguriert sein, dass eine scherende Wirkung beim Passieren der Förderelemente in den Öffnungen entsteht, so dass das Schüttgut nicht zerstört und die Förderelemente nicht beschädigt werden. Insbesondere bei langen Ausschnittskanten, die senkrecht zur Förderrichtung vorgesehen sind, tritt ein hoher Verschleiß der Förderelemente, v.a. der Scheiben, und ein erhöhter Bruch bei dem zu fördernden Schüttgut auf.

In einer Ausführungsform hat der Förderkanal eine Öffnung für den Antrieb z.B. im ersten Abschnitt des Förderkanals und/oder eine Auslassöffnung zum Entleeren des Schüttguts z.B. im oder am Ende des dritten Abschnitts des Förderkanals und/oder ein oder mehrere Sichtöffnungen (Sichtfenster) für Inspektionen in einem oder mehreren Abschnitten des Förderkanals und/oder eine Einführöffnung für die Förderelemente vor und/oder im ersten Abschnitt des Förderkanals oder zwischen dem dritten und dem ersten Abschnitt des Förderkanals. Für derartige Öffnungen gelten hierbei die gleichen Prinzipien wie für die oben beschriebene Zuführöffnung, so dass auch bei diesen Öffnungen Stoßkanten bei Rohrausschnitten soweit wie möglich vermieden werden können. Bei den beschriebenen Öffnungen, die insbesondere keine rechteckige Form aufweisen, wird der Verschleiß der Förderelemente verringert: Bei rechteckigen Ausschnitten findet eine punktförmige Belastung an den Kanten statt, während bei den hier beschriebenen und bevorzugten Ausführungen die Belastung bei der linearen Bewegung des Förderelements an unterschiedliche Stellen des Förderelements wandert.

In einer Ausführungsform ist die Einführöffnung für die Förderelemente z.B. gemäß dem "Poka Yoke"-Prinzip derart gestaltet, dass nur bestimmte Förderelemente in den Förderkanal eingebracht werden können und/oder Förderelemente nur lagerichtig in diesen eingeführt werden können. Auf diese Weise kann verhindert werden, dass z.B. Förderelemente einer falschen Größe, Baulänge oder mit einem nicht zum Antrieb passenden Abstand zwischen Räumerscheibe und Führungsscheibe in die Fördereinrichtung gelangen und dort zu Fehlfunktionen führen können, insbesondere z.B. auch dann wenn Förderelemente entgegen der Förderrichtung in den Förderkanal gelegt werden. Zum Beispiel kann die Form der Einführöffnung in der Förderrohrwand im Wesentlichen der Form des lagerichtig auf die Förderrohrwand projizierten Förderelements entsprechen bzw. insbesondere aus praktischen Gesichtspunkten lediglich unwesentlich größer sein, um ein leichteres Einführen des Förderelements zu ermöglichen.

In einer Ausführungsform ist mindestens eines der Förderelemente mit einem Label zur automatischen Identifizierung und/oder Lokalisierung versehen, und die Fördereinrichtung weist ein Lesegerät zum Auslesen des Labels auf. Insbesondere kann das Label ein auf das Förderelement gezeichneter/gedruckter Code (z.B. eine Kennzeichnung, die eine bestimmte Information bereitstellt) und/oder ein RFID-Transponder sein mit einem Code, der von dem Lesegerät z.B. an einem oder mehreren Stellen in/an dem Förderkanal, z.B. durch ein Sichtfenster oder eine andere Öffnung, ausgelesen werden kann. Auf diese Weise können z.B. Start- oder Stoppvorgänge gesteuert werden, z.B. kann die Fördereinrichtung derart konfiguriert sein, dass sie (nur) dann startet, wenn ein (bestimmtes) Förderelement an einer bestimmten Stelle identifiziert wurde, und/oder dann stoppt, sobald ein (bestimmtes) Förderelement an eine bestimmte Stelle geschoben wurde. Zum Beispiel können somit eine wohldefinierte Anzahl von Zyklen in der Fördereinrichtung vorbestimmt werden.

In einer Ausführungsform ist die Fördereinrichtung, insbesondere der Förderkanal abschließbar. Dies kann z.B. dann von Vorteil sein, wenn auf besondere Weise sichergestellt werden soll, dass keine Verunreinigungen mit anderen Schüttgütern, unerwünschte Kontaminationen oder sogar Gifte in die Fördereinrichtung gelangen können. Zum Beispiel kann vorgesehen sein, dass die Fördereinrichtung bzw. der Förderkanal an sämtlichen Abschnitten, die eine Öffnung in der Kanalwand (bzw. der Förderrohrwand) aufweisen, mit den dort angeschlossenen Einrichtungen versiegelt, z.B. verplombt, ist. Dies kann z.B. für eine Antriebseinrichtung, die über eine entsprechende Öffnung im ersten Abschnitt des Förderkanals in diesen eingreift, eine Zuführeinrichtung über die durch die Zuführöffnung im auf den ersten Abschnitt folgenden zweiten Abschnitt des Förderkanals das Schüttgut eingeführt werden soll, und eine Auslasseinrichtung für das Schüttgut, die am Ende des auf den zweiten Abschnitt folgenden dritten Abschnitts oder in einem auf den dritten Abschnitt folgenden vierten Abschnitt des Förderkanals über eines Auslassöffnung an dem Förderkanal angeordnet ist, gelten. Insbesondere kann die Fördereinrichtung derart konfiguriert sein, dass sich das Schüttgut von einer Zuführeinrichtung (mit eventuell vorgeschalteten, versiegelt angeschlossenen, weiteren Einrichtungen) bis hin zur Auslasseinrichtung und eventuell daran versiegelt angeschlossenen, weiteren Einrichtungen permanent in einem abgeschlossenen System befindet.

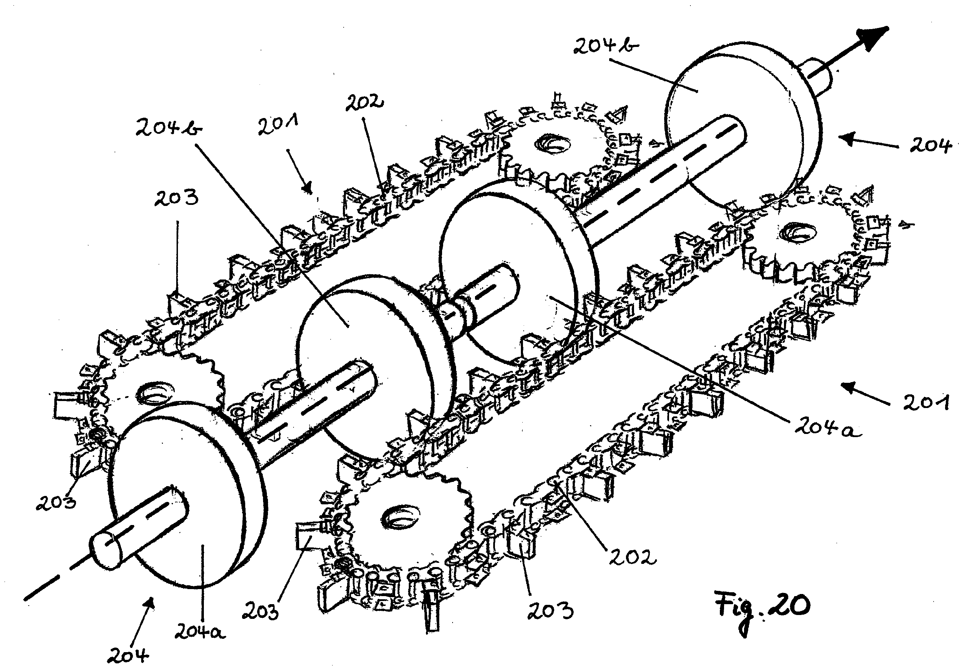

Weitere Merkmale und Vorteile der Erfindung werden nachfolgend anhand von Ausführungsbeispielen im Zusammenhang mit Figuren 20 bis 36 zum besseren Verständnis näher erläutert.

Ähnlich zu den Ausführungsformen in Figuren 13 bis 16, zeigen Figuren 20 bis 22 perspektivische Ansichten weiterer Ausführungsformen mit speziellen Antriebeinrichtungen.

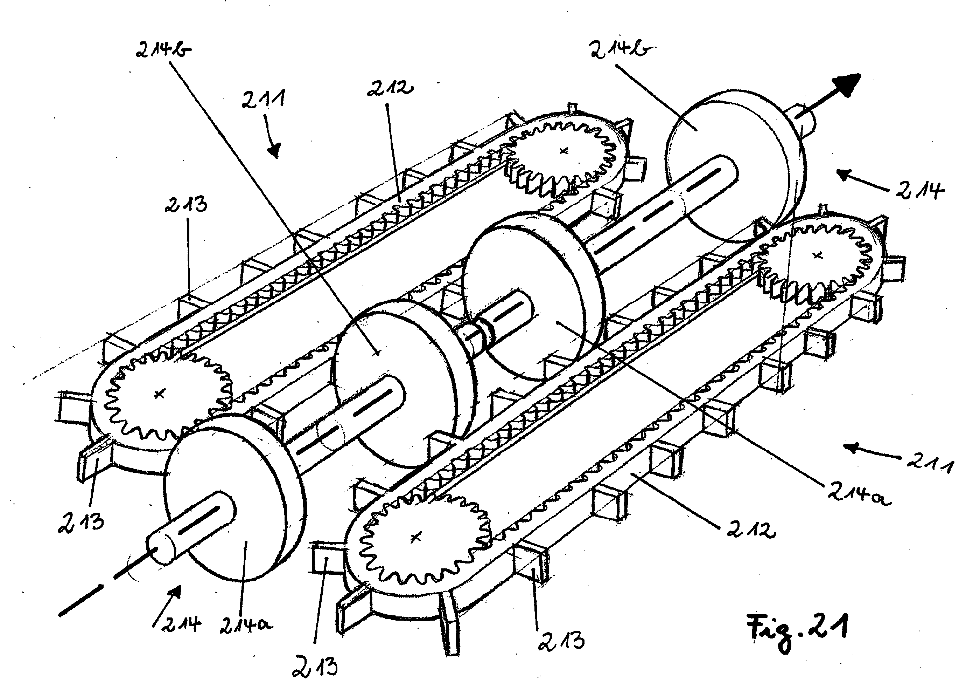

Figuren 20 und 21 stellen hierbei jeweils eine beidseitige Antriebseinrichtung 201, 211 mit jeweils einer Antriebskette 202, 212 dar, an der sich mehrere Antriebselemente 203, 213 befinden, die die Förderelemente 204, 214 in Förderrichtung (siehe Pfeil) durch den Förderkanal schieben. Im Gegensatz zu den in den Figuren 13 bis 16 gezeigten Ausführungsformen ist in den Ausführungsformen gemäß Figuren 20 und 21 der Abstand zwischen zwei Antriebselementen 203, 213 geringer als die Länge eines Förderelements 204, 214, z.B. ca. ein Drittel oder ca. ein Viertel der Länge eines Förderelements 204, 214. Insbesondere kann der Abstand zwischen zwei Antriebselementen 203, 213 derart an den Abstand zwischen der Räumerscheibe 204a, 214a und der Führungsscheibe 204b, 214b des Förderelements 204, 214 sowie an die Gesamtlänge der Förderelements 204, 214 angepasst sein, dass bei Kraftschluss zwischen dem Förderelement 204, 214 und einem davorliegenden Förderelement der Antrieb des Förderelements 204, 214 in Förderrichtung nur über die Räumerscheibe 204a, 214a erfolgt.

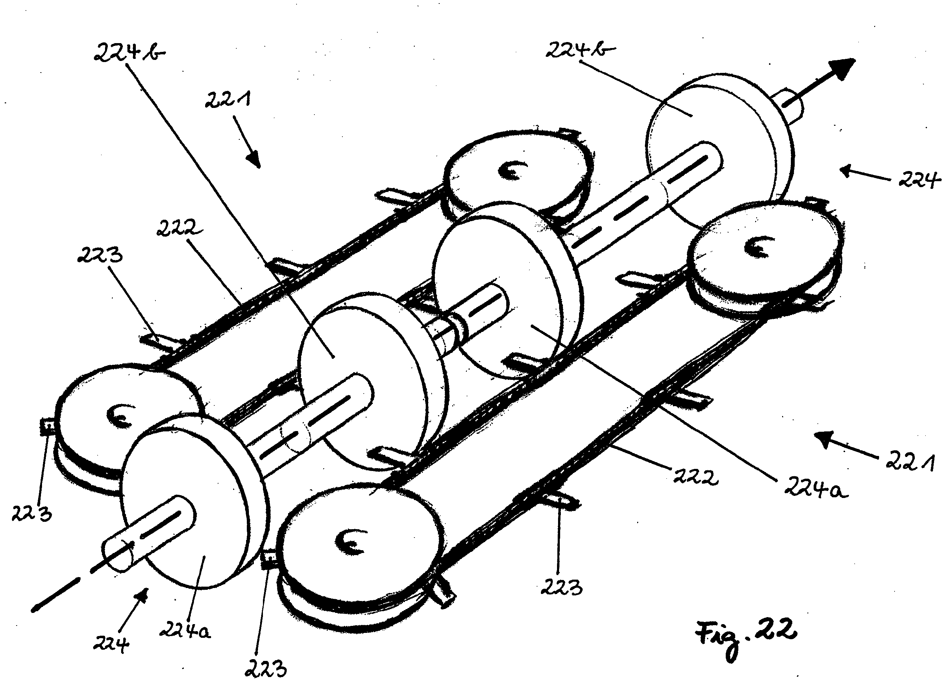

Ähnlich zu den Ausführungsformen in Figuren 20 und 21 zeigt Figur 22 eine Ausführungsform einer Antriebseinrichtung 221 mit zwei Antriebbändern 222, an denen Antriebselemente 223 angeordnet sind, deren Abstand geringer ist als die Länge eines Förderelements 224 in Förderrichtung (siehe Pfeil). Insbesondere ist der Abstand der Antriebselemente 223 in diesem Fall halb so groß wie der Abstand der Räumerscheibe 224a zu der Führungsscheibe 224b des Förderelements 224. Auf diese Weise kann, wie oben bereits erläutert, verhindert werden, dass bei einer Fehltaktung des Antriebs die gesamte Last auf der Führungsscheibe 224b des Förderelements 224 liegt, sobald das Förderelement auf ein davorliegendes Förderelement aufläuft.

In einer Ausführungsform der Erfindung können (z.B. auch alternativ oder auch zusätzlich zu den oben allgemein beschriebenen Antriebseinrichtungen) pneumatische und/oder hydraulische Antriebe vorgesehen sein.

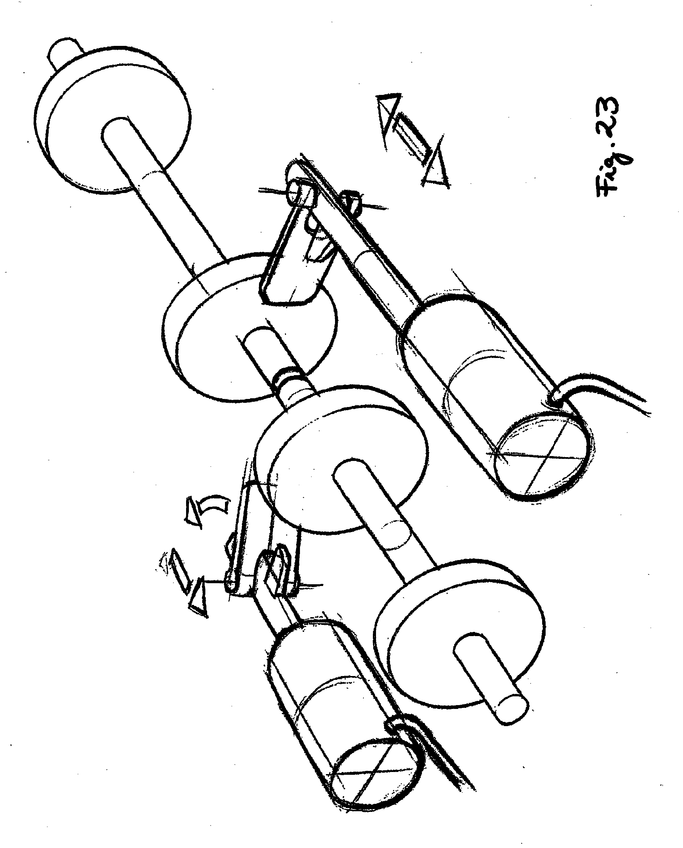

Figur 23 zeigt eine Antriebseinrichtung mit zwei Antriebselementen, die als pneumatische, hydraulische oder motorisch angetriebene Zylinder ausgebildet sind. Die Zylinder schieben hierbei mit einer Hubbewegung das Förderelement z.B. an dem Scheibenelement, vor. An der Koppelstelle von der Krafteinleitungsstelle zwischen Antrieb und Scheibenelement kann z.B. eine Klinke vorgesehen sein, so dass der Rückhub ohne Kontakt zu dem Förderelement in Rückrichtung erfolgen kann. Insbesondere sind zwei (oder 4 oder 6 usw.) derartige Antriebselemente vorteilhaft, so dass das eine Antriebselement sich im Lasthub befindet, während das andere Antriebselement im Leerhub zurückfährt.

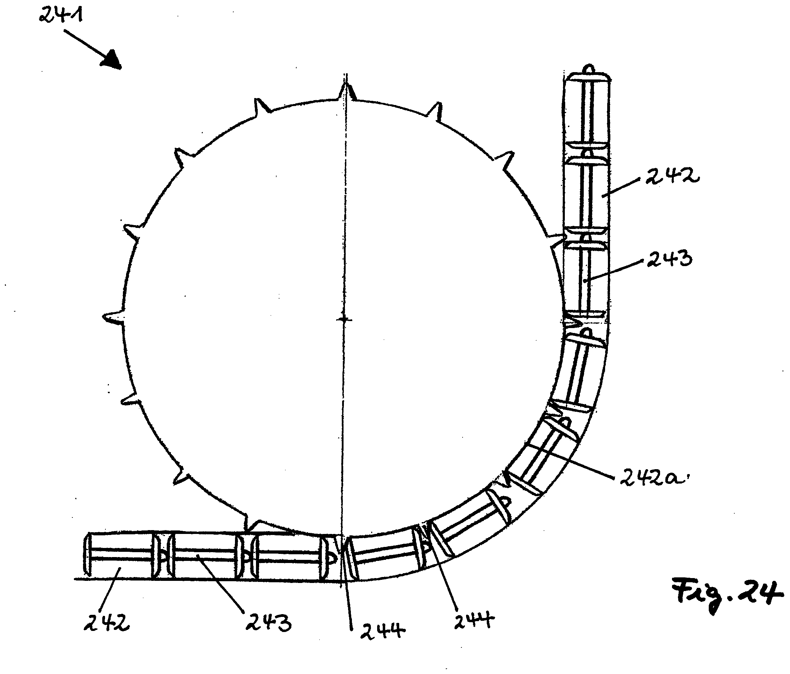

Figur 24 stellt einen Zahnradantrieb 241 dar, dessen Radius im Wesentlichen mit dem eines Innenbogenabschnitts 242a des Förderrohrs 242 übereinstimmt. Auf diese Weise können die Förderelemente 243 in dem Bogenabschnitt durch das Förderrohr 242 geschoben werden. In einer Ausführungsform kann ein derartiges Zahnradgetriebe z.B. als Zwischenantrieb in der Fördereinrichtung vorgesehen sein. In diesem Fall kann der Abstand in Förderrichtung zwischen zwei benachbarten Zähnen 244 des Zahnradantriebs in etwa der Länge eines Förderelements 243 entsprechen.

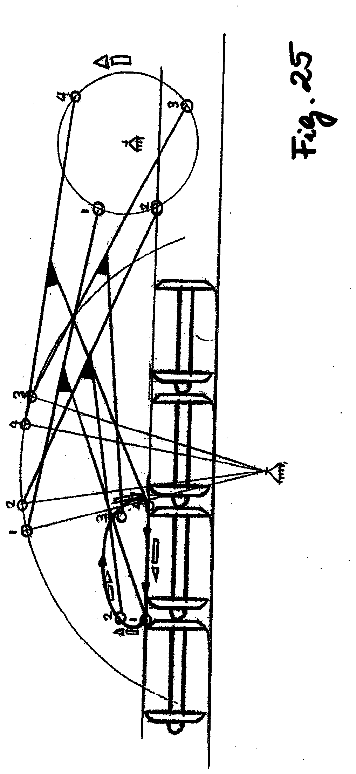

Figur 25 zeigt eine Ansicht eines Koppelgetriebes, insbesondere eines viergliedrigen Koppelgetriebes, bei dem ein Koppelpunkt über eine bestimmte Strecke eine geradlinige Abtriebsbewegung macht, über die das Getriebe die Förderelemente antreiben kann.

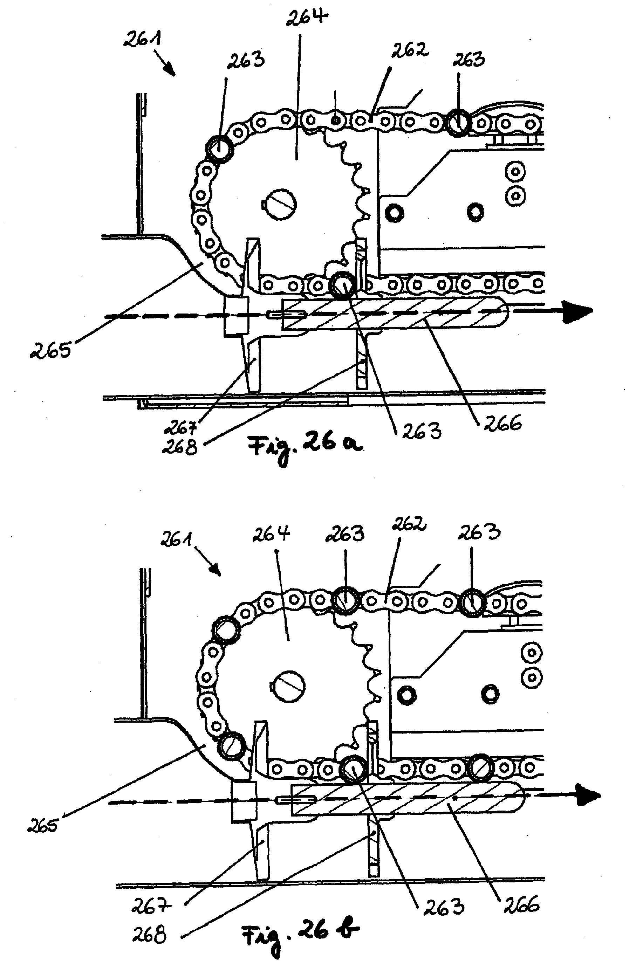

Figur 26a zeigt eine mechanische Antriebseinrichtung 261 mit einer Antriebskette 262 und Antriebselementen (z.B. Bolzen) 263, die von der Antriebskette 262 über ein Zahnrad 264 durch eine Antriebsöffnung 265 in einen ersten Abschnitt 265 des Förderrohrs geführt werden. In Figur 26a greift aufgrund einer Fehltaktung einer der Bolzen 263 das Förderelement 266 nicht an seiner Räumungsscheibe 267, sondern an seiner Führungsscheibe 268 an und schiebt das Förderelement 266 somit durch den ersten Abschnitt 265 des Förderrohrs durch direkte Krafteinwirkung auf die Führungsscheibe 268. Sobald das Förderelement 266 jedoch auf ein davorliegendes Förderelement aufläuft, steht die gesamte Last der davorliegenden Förderelemente und des zu fördernden Schüttguts auf der Führungsscheibe 268 des Förderelements 266, so dass dieses beschädigt oder sogar zerstört werden könnte.

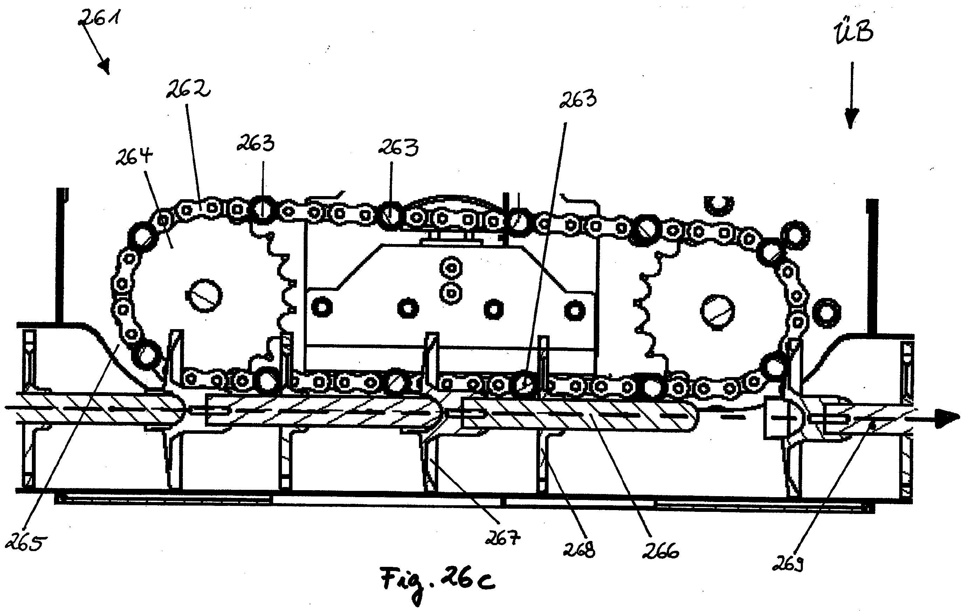

Aus diesem Grund sind in einer Ausführungsform der Erfindung zusätzliche Antriebselemente (z.B. Bolzen) in der Antriebseinrichtung vorgesehen. In Figuren 26b und 26c wird das Förderelement 266 ebenfalls an seiner Führungsscheibe 268 von einem Bolzen 263 in Förderrichtung (siehe Pfeil) geschoben. Allerdings wird das Förderelement 266 nur solange von dem Bolzen 263 vorgeschoben, bis dieses auf ein davorliegendes Förderelement 269 in einem Übergangsbereich ÜB von dem ersten Abschnitt 265 des Förderrohrs zu einem zweiten Abschnitt der Förderrohrs aufläuft. Dadurch dass in dieser Ausführungsform der Abstand zwischen Räumerscheibe 267 und Führungsscheibe 268 des Förderelements 266 etwas größer ist als der Abstand zweier benachbarter Bolzen 263 in Förderrichtung, bremst das Förderelement 266 (und alle nachfolgenden Förderelemente) in dem Moment, in dem es auf das davorliegenden Förderelement aufläuft, kurzzeitig ab und der Bolzen 263a direkt hinter dem bis jetzt kraftfübertragenden Bolzen 263 greift an die Räumerscheibe 267 an. Auf diese Weise wechselt in diesem Moment die Last von der schwächeren Führungsscheibe 268 auf die stabilere Räumerscheibe 267 des Förderelements 266 und eine Beschädigung des Förderelements 266 kann vermieden werden.

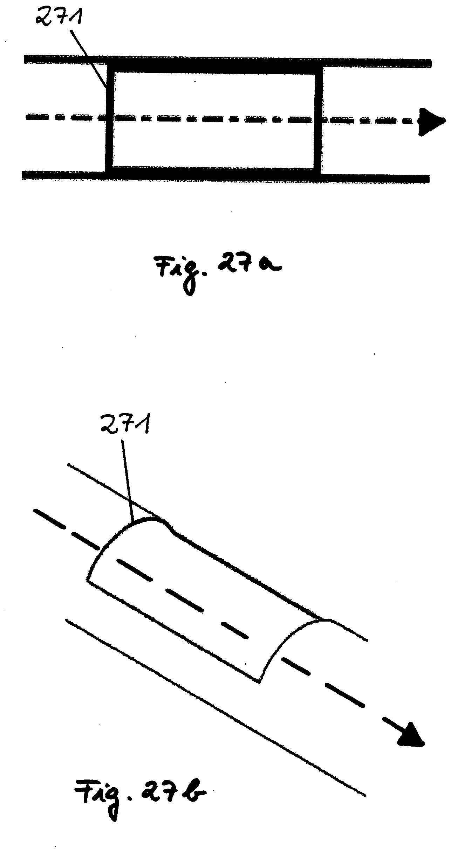

Figuren 27a und 27b zeigen eine Öffnung in einem Förderrohr gemäß dem Stand der Technik. Üblicherweise sind derartige Rohrausschnitte rechteckig geformt, haben allerdings den Nachteil, dass durch diese Form lange Ausschnittkanten 271 senkrecht zur Förderrichtung (siehe Pfeil) existieren. Derartige Stoßkanten können allerdings zu Beschädigungen der Förderelemente, zu einem erhöhten Verschleiß der Förderscheiben und zu einem erhöhten Bruch beim zu fördernden Schüttgut führen.

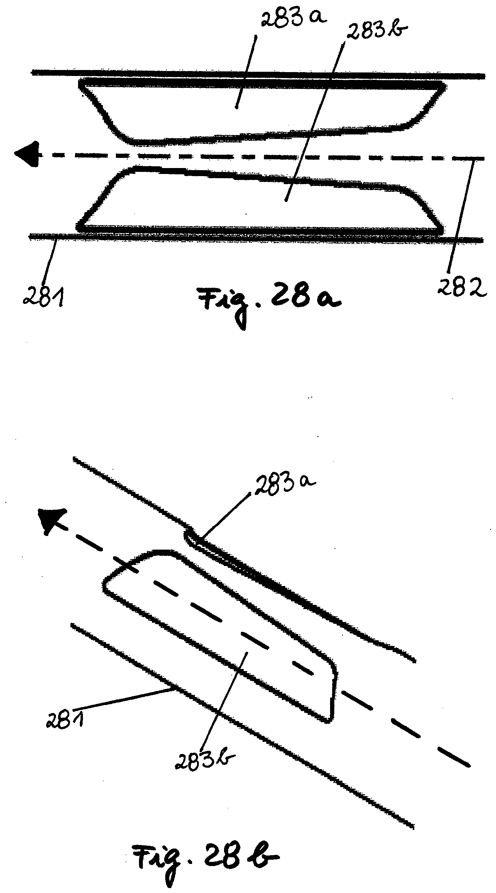

Figuren 28 bis 36 zeigen Ausführungsformen von Öffnungen bzw. Rohrausschnitten für den Förderkanal einer erfindungsgemäßen Fördereinrichtung.

Figur 28a und Figur 28b stellen z.B. eine Zuführöffnung dar, durch die Schüttgut in das Förderrohr zugeführt werden kann. Insbesondere verläuft in dieser Ausführungsform keine Ausschnittkante senkrecht zur Förderrichtung (siehe Pfeil). Zudem kann vorgesehen werden, dass die Zuführöffnung aus zwei in einer Draufsicht an der Längsachse 282 des Förderrohrs 281 gespiegelten Rohrausschnitten 283a und 283b besteht.

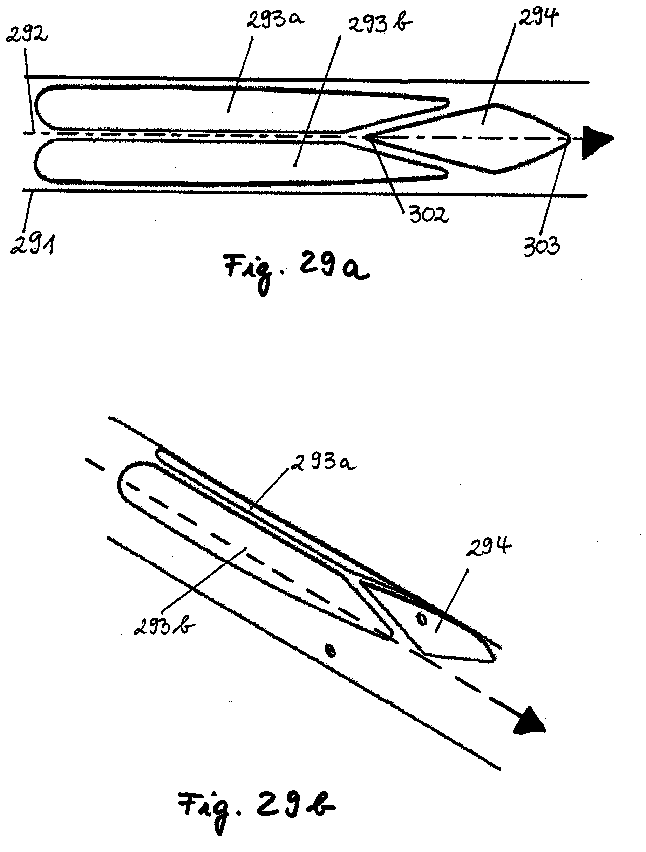

Figur 29a und Figur 29b stellen z.B. eine Auslassöffnung dar, durch die das Schüttgut aus der Fördereinrichtung entleert wird. Auch hier verläuft insbesondere keine der Ausschnittkanten senkrecht zur Förderrichtung (siehe Pfeil). In der dargestellten Ausführungsform besteht die Auslassöffnung aus zwei in einer Draufsicht an der Längsachse 292 des Förderrohrs 291 gespiegelten Rohrausschnitten 293a und 293b und einem zu dieser Längsachse symmetrischen Rohrausschnitt 294. Die Rohrausschnitte 293a und 293b weisen hierbei an der Stelle, an der ein sich in Förderrichtung bewegendes Förderelement auf die Auslassöffnung trifft, gebogene Stoßkanten auf, um das Förderelement vor Beschädigungen zu schützen.

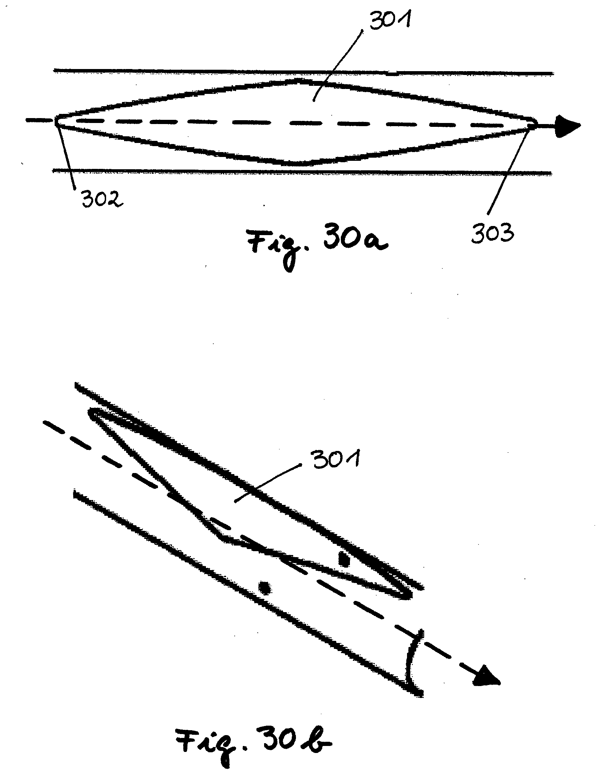

Der Rohrausschnitt 294 kann hierbei in einer Draufsicht die geometrische Form eines Drachenvierecks haben und ist insbesondere derart konfiguriert, dass z.B. auch Schüttgut, das sich im Förderrohr an dem Steg zwischen den Rohrausschnitten 293a und 293b befindet, aus der Auslassöffnung ausgeworfen wird, um evtl. spätere Vermischungen zu vermeiden. Wie in den Figuren 30a und 30b dargestellt, kann eine derartiges Drachenviereck auch allein als Auslassöffnung 301 dienen, wobei in diesem Fall das spitzere Ende 302 des Drachenvierecks 301 von einem sich in dem Förderrohr in Förderrichtung bewegenden Förderelement vor dem gegenüberliegenden stumpferen Ende 303 passiert wird (siehe Pfeil). In einer besonderen Ausführungsform kann das Drachenviereck rautenförmig sein.

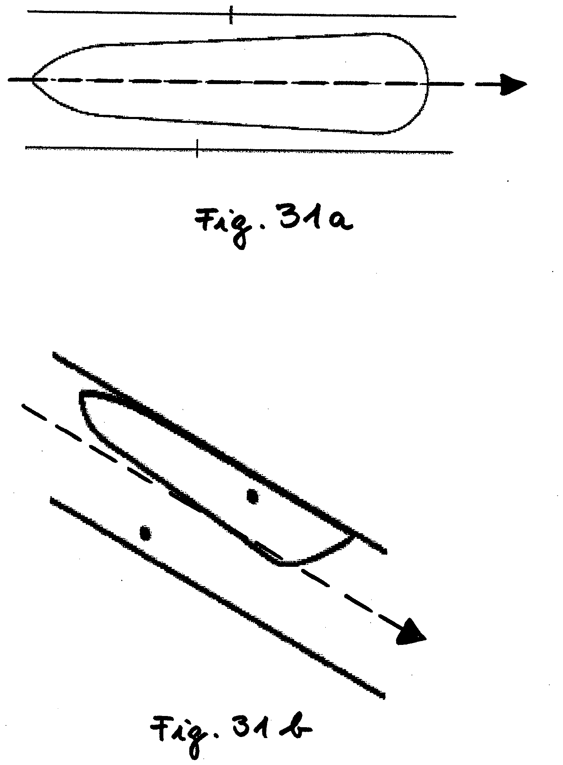

In einer Ausführungsform kann die Auslassöffnung im Wesentlichen die Form eines (langgezogenen) Tropfens haben, wie z.B. in den Figuren 31a und 31b gezeigt ist. Auch hier verläuft insbesondere keine der Ausschnittkanten senkrecht zur Förderrichtung (siehe Pfeil).

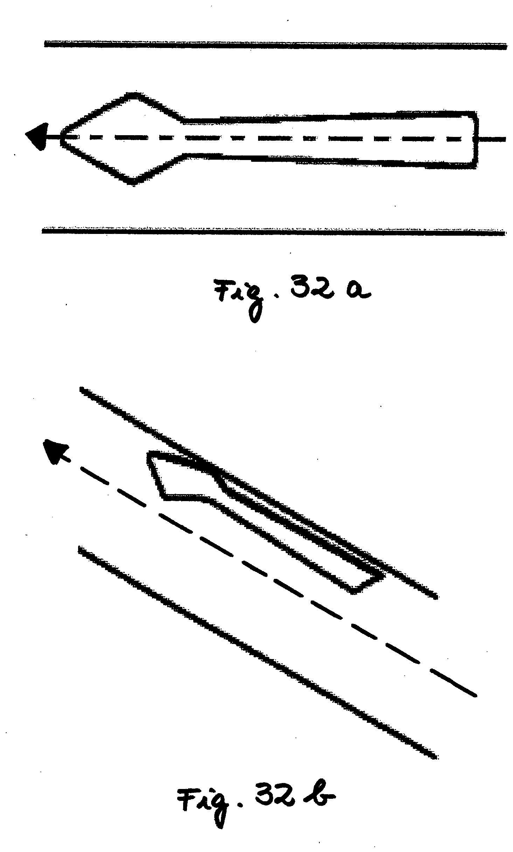

Figur 32a und Figur 32b stellen z.B. ein Sichtfenster dar, durch das der Fördervorgang beobachtet werden kann. Die Breite des in Draufsicht dargestellten Rohrausschnitts ist an der in Förderrichtung (siehe Pfeil) hintersten Stelle der Öffnung geringer als an einer anderen Stelle des Rohrausschnitts. Insbesondere kann der Rohrausschnitt im Wesentlichen pfeilförmig sein und in Förderrichtung weisen.

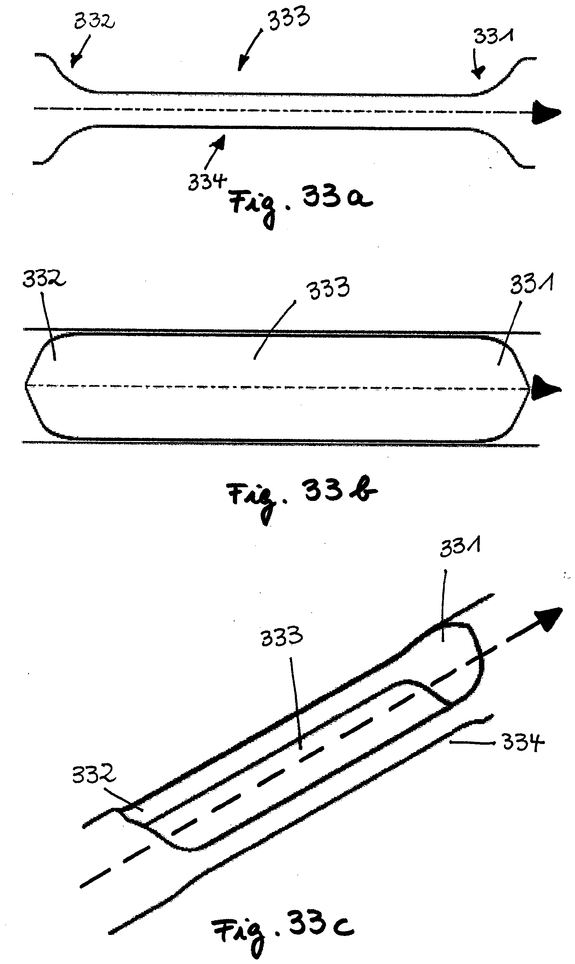

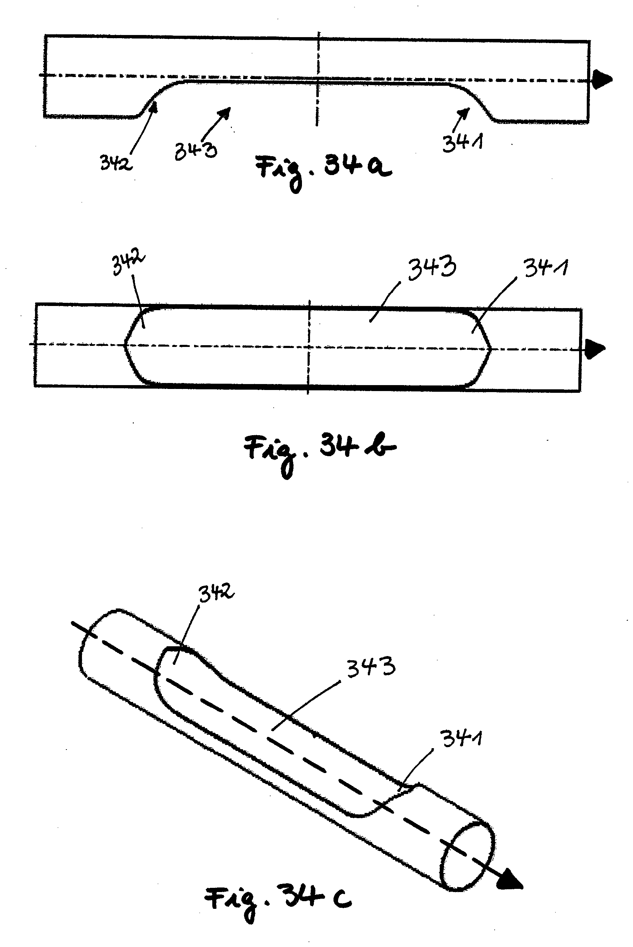

Figuren 33a bis 34c stellen z.B. Rohrausschnitte als Antriebsöffnungen dar, wobei die Rohrausschnitte an ihren in Förderrichtung (siehe Pfeil) vorderen Bereichen 331, 341 und hinteren Bereichen 332, 342 in einer Draufsicht (siehe Figur 33b) pfeilkopfförmig ausgebildet sind. Im Unterschied zu Figur 33 mit einem ersten Rohrausschnitt 333 und einem zweiten Rohrausschnitt 334, der dem ersten Rohrausschnitt 333 in einer Seitenansicht (siehe Figur 33a) gegenüberliegt, weist die Antriebsöffnung in Figur 34 nur einen Rohrausschnitt 343 auf. Zweiseitige Rohrausschnitte, wie in Figur 33 gezeigt, können insbesondere bei den oben beschriebenen zweiseitigen mechanischen Antrieben Verwendung finden.

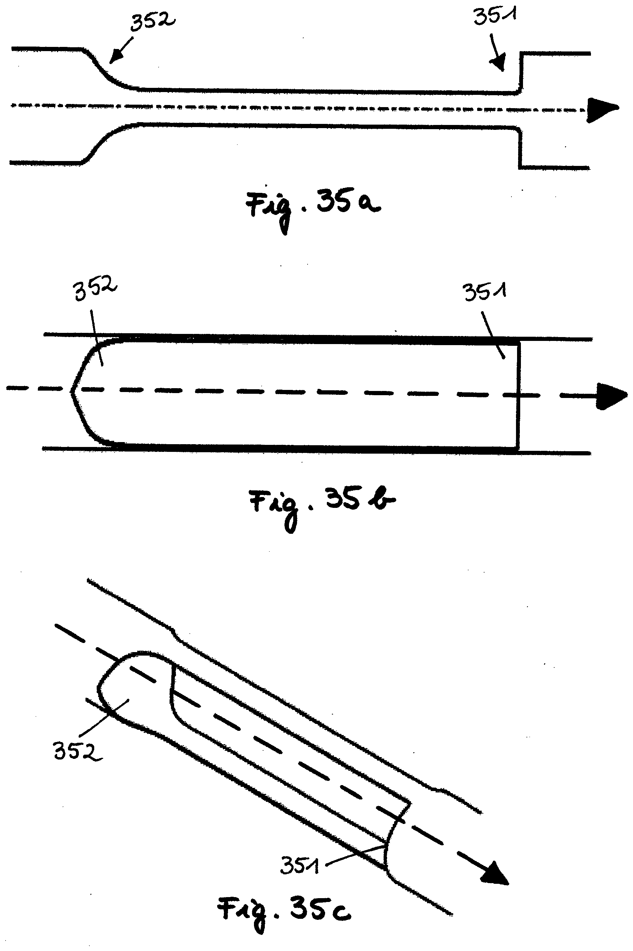

Figuren 35a bis 35c stellen Rohrausschnitte dar, die ebenfalls als Antriebsöffnungen dienen können. Im Gegensatz zu den Ausführungsformen in Figuren 33 und 34 sind die Rohrausschnitte hier nicht in beiden Bereichen 351 und 352, sondern nur in dem in Förderrichtung hinteren Bereich 352 pfeilkopfförmig ausgebildet. Der in Förderrichtung vordere Bereich 351 des Rohrausschnitts kann in diesem Fall senkrecht zur Förderrichtung vorgesehen sein.

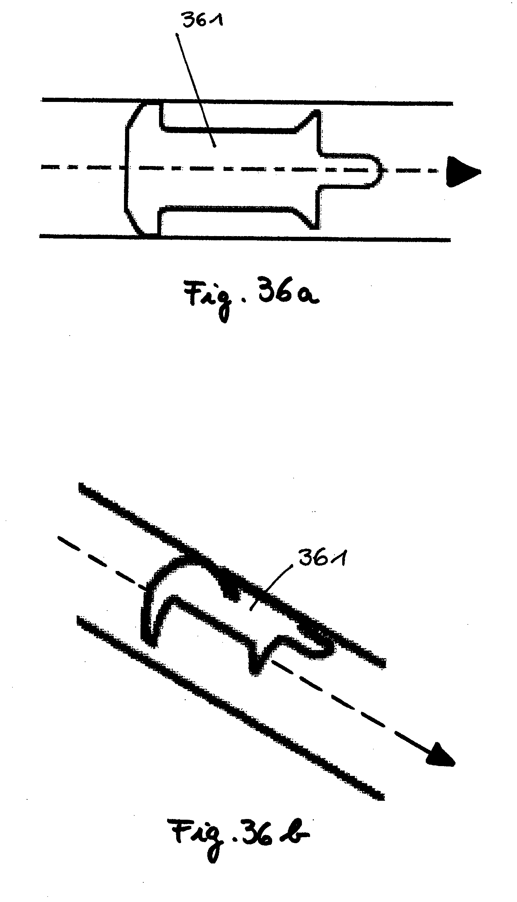

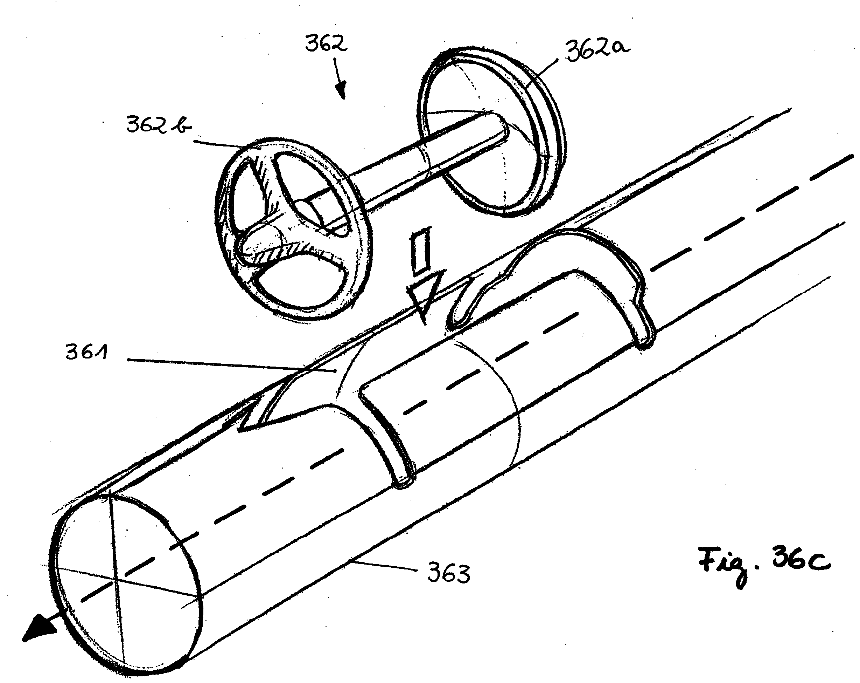

Figur 36a und Figur 36b stellen z.B. Rohrausschnitte als Einführöffnung für ein Förderelement dar. Die Einführöffnung 361 für die Förderelemente ist hierbei z.B. gemäß dem "Poka Yoke"-Prinzip derart gestaltet, dass nur bestimmte Förderelemente 362 in das Förderrohr 363 eingeführt werden können, wie z.B. auch in Figur 36c gezeigt. Auf diese Weise kann verhindert werden, dass z.B. Förderelemente mit einem nicht passenden Abstand zwischen Räumerscheibe 362a und Führungsscheibe 362b in die Fördereinrichtung gelangen und dort, insbesondere beim Eingreifen der Antriebseinrichtung, zu Fehlfunktionen führen können. Zum Beispiel kann die Form der Einführöffnung 361 in der Förderrohrwand im Wesentlichen der Form des auf die Förderrohrwand projizierten Förderelements 363 entsprechen.

Die vorliegende Erfindung stellt somit ein Verfahren und eine Fördereinrichtung bereit, mit denen sich die Förderleistung bei gleichzeitiger Energieeinsparung erhöhen lässt. Zudem können mit dem vorliegenden Konzept Förderhöhen von etwa 60 m erreicht werden, so dass die Fördereinrichtung durch effektivere Nutzung in allen Dimensionen des Raums bei gleichbleibender Förderleistung insgesamt weniger Grundfläche benötigt und zudem individuell gestaltet werden kann. Dadurch dass die Förderung des Schüttguts in dem Förderrohr mittels separater Einzelkörper (Förderelemente, Mitnehmer) erfolgt, die das Schüttgut durch das Förderrohr schieben bzw. drücken, findet eine nur geringe relative Bewegung des Schüttguts statt, was eine Entmischung und die innere Reibung reduziert. Zudem ist die Fördereinrichtung einfach in Aufbau, Montage und Wartung (wie dem Ersatz von einzelnen Förderelementen) und ist zudem leicht zu reinigen, da sich Rückstände in dem Förderrohr nicht ansammeln können und Schüttgut nicht verschleppt werden kann. Zudem ist nur ein Antrieb in einem bestimmten Abschnitt des Förderrohrs erforderlich, so dass - bei räumlicher Trennung des Antriebs von der Schüttgutzuführeinrichtung - der Antrieb mit dem Schüttgut nicht in Berührung kommt (hohe Sanitation).

## Patentansprüche

1. Verfahren zum Fördern von Schüttgut mittels einer Fördereinrichtung mit einem Förderkanal und mindestens zwei sich lose in dem Förderkanal befindenden Förderelementen (266, 269), **dadurch gekennzeichnet, dass** das Verfahren die folgenden Schritte aufweist:
mechanisches Antreiben der Förderelemente (266, 269) in Förderrichtung in einem ersten Abschnitt des Förderkanals,
Zuführen von Schüttgut in den Förderkanal in einem zweiten Abschnitt des Förderkanals,
Fördern des Schüttguts durch Bewegung der Förderelemente (266, 269) entlang der Förderrichtung in einem dritten Abschnitt des Förderkanals,
wobei im dritten Abschnitt des Förderkanals das erste Förderelement (269) von dem zweiten Förderelement (266) und/oder dem Schüttgut durch den Förderkanal in Förderrichtung gedrückt wird,
wobei jedes der mindestens zwei Förderelemente (266, 269) aufweist:
ein erstes Flächenelement (268), das von einem zweiten Flächenelement (267) im Wesentlichen parallel zur Förderkanalachse beabstandet ist, wobei die mittleren Oberflächensenkrechten der Flächenelemente (267, 268) im Wesentlichen parallel zur Förderkanalachse angeordnet sind, und wobei das erste und/oder zweite Flächenelement (267) eine Mitnehmerfläche aufweist, die im Wesentlichen die Förderung des Schüttguts in der Fördereinrichtung bewirkt;
eine Strebe, die im Wesentlichen parallel zur Förderkanalachse angeordnet ist und das erste und zweite Förderelement (266, 269) miteinander verbindet; und
einen Abstandshalterarm, der mit mindestens einem der ersten und zweiten Flächenelemente (267, 268) verbunden ist und sich von diesem in und/oder entgegen der Förderrichtung erstreckt, wodurch ein Mindestabstand zwischen einem Paar von unmittelbar aufeinanderfolgenden Flächenelementen der mindestens zwei Förderelemente erzielt wird.

2. Verfahren nach Anspruch 1, wobei bei dem mechanischen Antreiben ein Förderelement (266) über eine Öffnung (265) im ersten Abschnitt des Förderkanals mit mindestens einem Antriebselement (263) in direktem Kontakt steht.

3. Verfahren nach Anspruch 2, wobei pro Länge eines Förderelements (266) in Förderrichtung über die Öffnung (265) im ersten Abschnitt des Förderkanals mindestens zwei Antriebselemente (263) bereitgestellt sind.

4. Verfahren nach Anspruch 1, 2 oder 3, wobei die Längsachse mindestens eines Förderelements (266) im ersten Abschnitt des Förderkanals im Wesentlichen parallel zur Förderrichtung ausgerichtet ist.

5. Verfahren nach Anspruch 4, wobei die Förderelemente (266) im ersten Abschnitt des Förderkanals durch direkten Kontakt auf mindestens ein Förderelement angetrieben werden.

6. Verfahren nach Anspruch 4 oder 5, wobei die Förderelemente im Übergangsbereich (ÜB) zwischen dem ersten und dem zweiten Abschnitt des Förderkanals durch direkten Kontakt auf die in Förderrichtung hintere Scheibe (267) des Förderelements angetrieben werden.

7. Fördereinrichtung zum Fördern von Schüttgut mit einem Förderkanal und mindestens zwei Förderelementen (266, 269), **dadurch gekennzeichnet, dass** die Fördereinrichtung die folgenden Merkmale umfasst:
eine mechanische Antriebseinrichtung (261) zum Antreiben der Förderelemente (266, 269) in Förderrichtung in einem ersten Abschnitt des Förderkanals, wobei sich die Förderelemente lose in dem Förderkanal befinden,
wobei der Förderkanal eine Zuführöffnung zum Zuführen von Schüttgut in einem zweiten Abschnitt des Förderkanals aufweist, und
wobei die Fördereinrichtung derart konfiguriert ist, dass in einem dritten Abschnitt des Förderkanals das erste Förderelement (269) von dem zweiten Förderelement (266) und/oder Schüttgut durch den Förderkanal in Förderrichtung gedrückt wird,
wobei jedes der mindestens zwei Förderelemente (266, 269) aufweist:
ein erstes Flächenelement (268), das von einem zweiten Flächenelement (267) im Wesentlichen parallel zur Förderkanalachse beabstandet ist, wobei die mittleren Oberflächensenkrechten der Flächenelemente (267, 268) im Wesentlichen parallel zur Förderkanalachse angeordnet sind, und wobei das erste und/oder zweite Flächenelement (267) eine Mitnehmerfläche aufweist, die im Wesentlichen die Förderung des Schüttguts in der Fördereinrichtung bewirkt;
eine Strebe, die im Wesentlichen parallel zur Förderkanalachse angeordnet ist und das erste und zweite Förderelement (266, 269) miteinander verbindet; und
einen Abstandshalterarm, der mit mindestens einem der ersten und zweiten Flächenelemente (267, 268) verbunden ist und sich von diesem in und/oder entgegen der Förderrichtung erstreckt, wodurch ein Mindestabstand zwischen einem Paar von unmittelbar aufeinanderfolgenden Flächenelementen der mindestens zwei Förderelemente erzielt wird.

8. Fördereinrichtung nach Anspruch 7, wobei der Förderkanal im ersten Abschnitt eine Öffnung (265) aufweist, über die die Antriebseinrichtung (261) über direkten Kontakt auf die Förderelemente (266) diese in Förderrichtung durch den ersten Abschnitt des Förderkanals schiebt.

9. Fördereinrichtung nach Anspruch 7 oder 8, wobei die mechanische Antriebseinrichtung (261) mindestens zwei Antriebselemente (263) aufweist, wobei der Abstand der Antriebselemente in Förderrichtung der halben Länge eines Förderelements entspricht.

10. Fördereinrichtung nach einem der Ansprüche 7 bis 9, wobei Antriebselemente (263) der mechanischen Antriebseinrichtung Bolzen und/oder Hydraulikelemente und/oder Druckluftelemente sind.

11. Fördereinrichtung nach einem der Ansprüche 7 bis 10, wobei der Förderkanal in dem zweiten Abschnitt eine nicht rechteckige Zuführöffnung für Schüttgut aufweist.

12. Fördereinrichtung nach einem der Ansprüche 7 bis 11, wobei der Förderkanal eine Öffnung aufweist, deren Breite an der in Förderrichtung hintersten Stelle der Öffnung geringer ist als an einer anderen Stelle der Öffnung.

13. Fördereinrichtung nach Anspruch 12, wobei die Öffnung eine Antriebsöffnung und/oder die Zuführöffnung und/oder eine Auslassöffnung und/oder ein Sichtfenster und/oder eine Einführöffnung für Förderelemente ist.

14. Fördereinrichtung nach einem der Ansprüche 7 bis 13, wobei die Fördereinrichtung, insbesondere der Förderkanal, abschließbar ist.

15. Fördereinrichtung nach einem der Ansprüche 7 bis 14, wobei mindestens eines der Förderelemente mit einem Label zur automatischen Identifizierung und/oder Lokalisierung versehen ist und die Fördereinrichtung ein Lesegerät zum Auslesen des Labels umfasst.

## Claims

1. A method for conveying bulk goods by means of a conveying device comprising a conveying channel and at least two conveying elements (266, 269) loosely arranged in the conveying channel, **characterized in that** the method comprises the following steps:
mechanically driving the conveying elements (266, 269) in the conveying direction in a first section of the conveying channel,
feeding bulk goods into the conveying channel in a second section of the conveying channel,
conveying the bulk goods by moving the conveying elements (266, 269) along the conveying direction in a third section of the conveying channel,
wherein in the third section of the conveying channel, the first conveying element (269) is pressed by the second conveying element (266) and/or the bulk goods through the conveying channel in the conveying direction,
wherein each of the at least two conveying elements (266, 269) comprises:
a first surface element (268) which is spaced from a second surface element (267) substantially parallel to the conveying channel axis, wherein the mean surface perpendiculars of the surface elements (267, 268) are arranged substantially parallel to the conveying channel axis, and wherein the first and/or the second surface element (267) comprises a carrier surface which substantially causes the bulk goods to be conveyed in the conveying device;
a strut being arranged substantially parallel to the conveying channel axis and connecting the first and the second conveying element (266, 269) to each other; and
a spacer arm connected to at least one of the first and second surface elements (267, 268) and extending away therefrom in and/or contrary to the conveying direction, so that a minimum distance between a pair of directly successive surface elements of the at least two conveying elements is achieved.

2. The method according to claim 1, wherein during mechanical driving, a conveying element (266) is in direct contact with at least one drive element (263) via an opening (265) in the first section of the conveying channel.

3. The method according to claim 2, wherein per length of a conveying element (266) in the conveying direction, at least two drive elements (263) are provided via the opening (265) in the first section of the conveying channel.

4. The method according to claim 1, 2 or 3, wherein the longitudinal axis of at least one conveying element (266) is aligned substantially parallel to the conveying direction in the first section of the conveying channel.

5. The method according to claim 4, wherein the conveying elements (266) are driven by direct contact with at least one conveying element in the first section of the conveying channel.

6. The method according to claim 4 or 5, wherein the conveying elements in the transition area (UB) between the first and the second section of the conveying channel are driven by direct contact with the rear disk (267) of the conveying element in the conveying direction.

7. A conveying device for conveying bulk goods comprising a conveying channel and at least two conveying elements (266, 269), **characterized in that** the conveying device comprises the following features:
a mechanical drive means (261) for driving the conveying elements (266, 269) in the conveying direction in a first section of the conveying channel, wherein the conveying elements are loosely arranged in the conveying channel,
wherein the conveying channel comprises a feeding opening for feeding bulk goods in a second section of the conveying channel, and
wherein the conveying device is configured such that in a third section of the conveying channel the first conveying element (269) is pressed by the second conveying element (266) and/or bulk goods through the conveying channel in the conveying direction, wherein each of the at least two conveying elements (266, 269) comprises:
a first surface element (268) which is spaced from a second surface element (267) substantially parallel to the conveying channel axis, wherein the mean surface perpendiculars of the surface elements (267, 268) are arranged substantially parallel to the conveying channel axis, and wherein the first and/or the second surface element (267) comprises a carrier surface which substantially causes the bulk goods to be conveyed in the conveying device;
a strut being arranged substantially parallel to the conveying channel axis and connecting the first and the second conveying element (266, 269) to each other; and
a spacer arm connected to at least one of the first and second surface elements (267, 268) and extending away therefrom in and/or contrary to the conveying direction, so that a minimum distance between a pair of directly successive surface elements of the at least two conveying elements is achieved.

8. The conveying device according to claim 7, wherein the conveying channel comprises an opening (265) in the first section through which the drive means (261) pushes the conveying elements (266) via direct contact therewith through the first section of the conveying channel in the conveying direction.

9. The conveying device according to claim 7 or 8, wherein the mechanical drive means (261) comprises at least two drive elements (263), wherein the distance between the drive elements in the conveying direction corresponds to half the length of a conveying element.

10. The conveying device according to any of claims 7 to 9, wherein drive elements (263) of the mechanical drive means are bolts and/or hydraulic elements and/or pneumatic elements.

11. The conveying device according to any of claims 7 to 10, wherein the conveying channel has a non-rectangular feeding opening for bulk goods in the second section.

12. The conveying device according to any of claims 7 to 11, wherein the conveying channel has an opening whose width at the rearmost point of the opening in the conveying direction is smaller than at another point of the opening.

13. The conveying device according to claim 12, wherein the opening is a drive opening and/or the feeding opening and/or an outlet opening and/or a viewing window and/or an insertion opening for conveying elements.

14. The conveying device according to any of claims 7 to 13, wherein the conveying device, in particular the conveying channel, is lockable.

15. The conveying device according to any of claims 7 to 14, wherein at least one of the conveying elements is provided with a label for automatic identification and/or localization, and the conveying device comprises a reader for reading out the label.

## Revendications

1. Procédé de transport de matière en vrac au moyen d'un dispositif de transport comportant un canal de transport et au moins deux éléments de transport (266, 269) disposés de manière mobile dans le canal de transport, **caractérisé en ce que** ledit procédé comprend les étapes suivantes :
entraînement mécanique des éléments de transport (266, 269) dans la direction de transport, dans une première section du canal de transport,
amenée de la matière en vrac dans le canal de transport, dans une deuxième section du canal de transport,
transport de la matière en vrac par déplacement des éléments de transport (266, 269) dans la direction de transport, dans une troisième section du canal de transport, où, dans la troisième section du canal de transport, le premier élément de transport (269) est poussé par le deuxième élément de transport (266) et/ou par la matière en vrac dans le canal de transport, dans la direction de transport,
où chacun des au moins deux éléments de transport (266, 269) présente :
un premier élément de surface (268), espacé d'un deuxième élément de surface (267) sensiblement parallèlement à l'axe de transport, les perpendiculaires médianes à la surface desdits éléments de surface (267, 268) étant sensiblement parallèles à l'axe du canal de transport, et le premier et/ou deuxième élément de surface (267) comportant une surface d'entraînement provoquant principalement le transport de la matière en vrac dans le dispositif de transport ;
une entretoise, disposée sensiblement parallèlement à l'axe du canal de transport et reliant le premier au deuxième élément de transport (266, 269) ; et
un bras espaceur, lequel est relié à au moins un élément parmi le premier et le deuxième éléments de surface (267, 268) et qui s'étend depuis celui-ci dans la direction de transport et/ou dans la direction opposée à celle-ci, un espacement minimal étant ainsi obtenu entre une paire d'éléments de surface immédiatement consécutifs des au moins deux éléments de transport.

2. Procédé selon la revendication 1, où lors de l'entraînement mécanique, un élément de transport (266) est en contact direct avec au moins un élément d'entraînement (263) par une ouverture (265) dans la première section du canal de transport.

3. Procédé selon la revendication 2, où au moins deux éléments d'entraînement (263) sont présentés par l'ouverture (265) dans la première section du canal de transport par longueur d'un élément de transport (266) dans la direction de transport.

4. Procédé selon la revendication 1, la revendication 2 ou la revendication 3, où l'axe longitudinal d'au moins un élément de transport (266) est orienté sensiblement parallèlement à la direction de transport dans la première section du canal de transport.

5. Procédé selon la revendication 4, où les éléments de transport (266) dans la première section du canal de transport sont entraînés par contact direct sur au moins un élément de transport.

6. Procédé selon la revendication 4 ou la revendication 5, où les éléments de transport dans la zone de transition (ÜB) entre la première et la deuxième section du canal de transport sont entraînés dans la direction de transport par contact direct sur le disque arrière (267) de l'élément de transport.

7. Dispositif de transport pour le transport de matière en vrac, comportant un canal de transport et au moins deux éléments de transport (266, 269),
**caractérisé en ce que** ledit dispositif de transport comprend les caractéristiques suivantes :
un dispositif mécanique d'entraînement (261) pour l'entraînement des éléments de transport (266, 269) dans la direction de transport dans une première section du canal de transport, les éléments de transport étant disposés de manière mobile dans le canal de transport,
où le canal de transport présente une ouverture d'amenée pour l'amenée de matière en vrac dans une deuxième section du canal de transport, et
où le dispositif de transport est configuré de telle manière que, dans une troisième section du canal de transport, les premier élément de transport (269) est poussé par le deuxième élément de transport (266) et/ou par la matière en vrac dans la direction de transport dans le canal de transport,
où chacun des au moins deux éléments de transport (266, 269) présente :
un premier élément de surface (268), espacé d'un deuxième élément de surface (267) sensiblement parallèlement à l'axe de transport, les perpendiculaires médianes à la surface desdits éléments de surface (267, 268) étant sensiblement parallèles à l'axe du canal de transport, et le premier et/ou deuxième élément de surface (267) comportant une surface d'entraînement provoquant principalement le transport de la matière en vrac dans le dispositif de transport ;
une entretoise, disposée sensiblement parallèlement à l'axe du canal de transport et reliant le premier au deuxième élément de transport (266, 269) ; et
un bras espaceur, lequel est relié à au moins un élément parmi le premier et le deuxième éléments de surface (267, 268) et qui s'étend depuis celui-ci dans la direction de transport et/ou dans la direction opposée à celle-ci, un espacement minimal étant ainsi obtenu entre une paire d'éléments de surface immédiatement consécutifs des au moins deux éléments de transport.

8. Dispositif de transport selon la revendication 7, où le canal de transport présente une ouverture (265) dans la première section, par laquelle le dispositif d'entraînement (261) pousse les éléments de transport (266) dans la direction de transport dans la première section du canal de transport, par contact direct sur ceux-ci.

9. Dispositif de transport selon la revendication 7 ou la revendication 8, où le dispositif mécanique d'entraînement (261) comprend au moins deux éléments d'entraînement (263), l'espacement des éléments d'entraînement dans la direction de transport correspondant à une demi-longueur d'un élément de transport.

10. Dispositif de transport selon l'une des revendications 7 à 9, où les éléments d'entraînement (263) du dispositif mécanique d'entraînement sont des axes et/ou des éléments hydrauliques et/ou des éléments pneumatiques.

11. Dispositif de transport selon l'une des revendications 7 à 10, où le canal de transport présente dans la deuxième section une ouverture d'amenée non rectangulaire pour la matière en vrac.

12. Dispositif de transport selon l'une des revendications 7 à 11, où le canal de transport présent une ouverture dont la largeur à l'arrière de l'ouverture dans la direction de transport est inférieure à la largeur à un autre emplacement de l'ouverture.

13. Dispositif de transport selon la revendication 12, où l'ouverture est une ouverture d'entraînement et/ou l'ouverture d'amenée et/ou une ouverture de sortie et/ou une fenêtre d'observation et/ou une ouverture d'introduction pour éléments de transport.

14. Dispositif de transport selon l'une des revendications 7 à 13, où ledit dispositif de transport, en particulier le canal de transport, peut être fermé.

15. Dispositif de transport selon l'une des revendications 7 à 14, où au moins un des éléments de transport est pourvu d'une étiquette pour l'identification et/ou la localisation automatiques, et où ledit dispositif de transport comprend un lecteur pour la lecture de l'étiquette.
